# EUROPEAN PATENT APPLICATION

(11) **EP 4 796 193 A2**
(43) Date of publication of application: **26.08.2026**
(21) Application number: 26159143.2
(22) Date of filing: 17.02.2026
(51) Int. Cl.: A63F 13/422, A63F 13/67

(54) **MACHINE LEARNING-BASED PLAYER CONTROLS IN FULLY CONTROLLED CAMERA SYSTEMS**

(30) Priority: 19.02.2025 US 202563760470 P; 16.01.2026 US 202619452061
(71) Applicant: Skydance Silicon Valley, LLC, Santa Monica, California 90404 (US)
(72) Inventor: ISAAK, Jeremy Luke, Santa Monica, 90404 (US); BEAK, Julian Anthony, Santa Monica, 90404 (US)
(74) Representative: Gevers Patents

(57) **Abstract**

Systems and methods described herein relate to systems and methods for managing player controls within a fully controlled camera system for an interactive environment. The system automatically renders camera views from different orientations, creating cinematic cuts without direct player input. In response to a cut from a first orientation to a second, the system establishes a new control scheme relative to the new view to maintain intuitive gameplay. A transition to the second control scheme is delayed based on a predicted adaptation time generated by a machine-learning model. This model analyzes the current game state context to determine how long a specific player needs to reorient. Additionally, the system utilizes player hints provided via input devices, converting these hints into contextual weights via a weighting model. These weights influence the scoring of potential camera points, allowing the player to guide camera selection without disrupting the cinematic experience.

## Description

### PRIORITY

This application claims the benefit of, and priority to U.S. Provisional Application, entitled "Machine Learning-Based Player Controls In Fully Controlled Camera Systems," filed on February 19, 2025 and having application serial number 63/760,470, the entirety of each of said application being incorporated herein by reference.

### FIELD

The present disclosure relates to interactive games. More particularly, the present disclosure relates to utilizing machine-learning methods to properly manage player controls for a fully controlled camera system within an interactive game.

### BACKGROUND

In three-dimensional interactive games, the use of camera controls has been highly prevalent, as it allows players to navigate and interact with complex environments. Players typically use control sticks or mouse inputs to adjust the camera angle, ensuring they have a view of their surroundings and can respond to in-game challenges. However, in these traditional games where players control the game camera with, for example, a control stick, a common issue is that players spend significant amounts of time staring at the back of their main character. This setup often results in a detached experience, where the player feels like they are controlling a remote-controlled object rather than embodying the character they are playing. The constant rear view limits the sense of immersion, making it difficult for players to fully engage with the game world and the character's experiences.

Controlling a three-dimensional game camera can also present a steep learning curve, particularly for newer players who may struggle with the complexity of navigating and adjusting the camera. Unlike two-dimensional games where movement and perspective are straightforward, three-dimensional environments require players to manage an additional axis of control, often leading to disorientation and frustration. New players must learn to coordinate their character's movements with the camera's angle, ensuring they maintain a clear view of their surroundings while also responding to in-game challenges. This dual tasking can sometimes be overwhelming, as it involves mastering the use of control sticks or mouse inputs to achieve smooth and precise camera adjustments.

Additionally, the sensitivity settings, inversion options, and various camera modes can add layers of complexity, making it difficult for inexperienced players to find a comfortable setup. These challenges can detract from the enjoyment of the game, as players may spend more time wrestling with camera controls than engaging with the gameplay and story, potentially discouraging continued play and diminishing the overall gaming experience. These issues can create a psychological barrier for the player, reducing the emotional connection and sense of presence within the game. Instead of feeling like they are part of the action, players may feel more like observers, which can diminish the overall impact of storytelling and character development.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a video game ecosystem in accordance with various embodiments of the disclosure;
FIG. 2 is a conceptual block diagram of a device suitable for configuration with a full control camera logic, in accordance with various embodiments of the disclosure;
FIG. 3 is an abstract block diagram of the components of a fully controlled camera system 300 in accordance with various embodiments of the disclosure;
FIG. 4 is an abstract block diagram of the data within a storage 318 of a fully controlled camera system in accordance with various embodiments of the disclosure;
FIG. 5 is a conceptual illustration of automatic relative movement control changes in accordance with various embodiments of the disclosure;
FIG. 6 is a conceptual illustration of utilizing player hints in camera selection weighting in accordance with various embodiments of the disclosure;
FIG. 7 is a flowchart of a process for utilizing relative control schemes in accordance with various embodiments of the disclosure;
FIG. 8 is a flowchart of a process for adapting a relative control scheme to a player in accordance with various embodiments of the disclosure;
FIG. 9 is a flowchart of a process for utilizing telemetry data in a relative control scheme in accordance with various embodiments of the disclosure;
FIG. 10 is a flowchart of a process for utilizing player hints for camera score weighting in accordance with various embodiments of the disclosure;
FIG. 11 is a diagram depicting various subsets of artificial intelligence in accordance with various embodiments of the disclosure;
FIG. 12 depicts different methods of machine-based learning in accordance with various embodiments of the disclosure;
FIG. 13 depicts a machine learning lifecycle in accordance with various embodiments of the disclosure;
FIG. 14 is an exemplary neural network for use in a player control system in accordance with various embodiments of the disclosure;
FIG. 15 is a flowchart of a process for predicting player adaptation time using machine learning in accordance with various embodiments of the disclosure;
FIG. 16 is a flowchart of a process for machine learning based hint weighting in accordance with various embodiments of the disclosure; and
FIG. 17 is a flowchart of a process for training control scheme models via telemetry in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the problems and issues described herein, embodiments of the present disclosure facilitate a fully controlled camera system within an interactive game environment utilizing machine learning to optimize player control. Traditional three-dimensional games often burden players with the complex task of manually manipulating a camera while simultaneously navigating a character, leading to a steep learning curve and frequent disorientation . This manual control frequently results in uninspired visual framing, where the player spends significant time viewing the back of their character rather than experiencing the game world through a cinematic lens . By automating camera movements and transitions based on established cinematographic principles, the disclosed system removes the need for manual camera management, allowing players to remain immersed in the action.

To ensure that this automated visual experience does not hinder gameplay, the system establishes dynamic control schemes that adjust relative to the current camera orientation. When the virtual camera cuts from one perspective to another, the logic governing player inputs is recalibrated so that directional commands remain intuitive relative to what is displayed on the screen . For example, if a camera angle shifts from a rear view to a side view, the input required to move the character forward is automatically remapped to align with the new visual context. This continuous synchronization between the visual presentation and the control interface ensures that the player maintains a seamless connection to their avatar, even as the perspective changes dramatically.

A critical aspect of these embodiments involves managing the transition period immediately following a camera cut to prevent erratic character movement. Recognizing that players may not instantaneously adjust their physical inputs to match a sudden change in perspective, the system can implement a transition delay or lag before the new control scheme takes effect. In many embodiments, this delay is governed by a machine-learning adaptation model that analyzes the current game state and generates a predicted output representing how long a specific player needs to reorient themselves . By utilizing a predictive timer rather than a fixed arbitrary value, the system creates a personalized safety window that maintains the player's momentum without causing unintended directional shifts during critical gameplay moments.

The accuracy of these control transitions is further refined through the continuous analysis of player telemetry data collected during gameplay sessions. The system records input patterns during camera cuts to identify signatures of confusion, such as hesitation or immediate corrective movements, which serve as training data for the underlying neural networks . This historical data allows the control logic to learn from past errors, progressively tuning the adaptation models to better suit the individual player's reaction times and playstyle . Consequently, the interactive environment evolves over time, becoming more responsive and fluid as it gathers more information about how the user interacts with the automated camera system.

Furthermore, the disclosed system preserves player agency by integrating directional hints that influence, rather than override, the automated camera selection. Players can signal their interest in a specific area or object through subtle input gestures, which are then converted into weighted values that affect the scoring of potential camera angles . These weights are often applied contextually using machine-learning models that evaluate the current gameplay intensity, ensuring that a player's curiosity does not compromise the framing during high-stakes combat sequences . This intelligent weighting mechanism strikes a balance between cinematic direction and player intent, offering a responsive viewing experience that adapts to both the narrative needs of the game and the immediate desires of the user

In further response to the problems outlined above, embodiments of the disclosure described herein can utilize a fully controlled camera system in a game where the camera automatically switches between different angles during gameplay, unlike traditional games where players manually control the camera. This system can leverage various cinematographic principles to make these cuts occur and are perceived seamlessly, enhancing the cinematic quality of the game and maintaining immersion. In many embodiments, a goal is to create a gameplay experience that looks and feels like a movie, with dynamic camera angles and transitions that respond to the action in real-time.

In traditional games a single orbiting camera is often used that players can control, but embodiments described herein can integrate various heuristics and other processes to manage camera angles automatically, adhering to rules of cinema such as the 180-degree rule, avoiding jump cuts, and framing shots effectively. This approach can allow the game to maintain a cinematic feel even during intense combat scenes, making the gameplay look like a polished action movie.

The fully controlled camera system can be configured to keep players oriented and engaged by using screen-relative controls, meaning the direction the player moves is always consistent with what they see on screen, regardless of camera angle changes. This can reduce the learning curve and disorientation for players, allowing them to focus on the action rather than camera management. In many embodiments, an aim is to perfect the fully controlled camera system to the point where manual camera control is unnecessary, providing a seamless and intuitive experience that aligns with narrative and gameplay needs.

Control schemes, meaning how a player's actions on an input device affect the actions within the game environment can change dynamically in response to camera cuts. When the camera transitions from one perspective to another, the system can recalibrate the control inputs and the player can also recalibrate such that their player character's actions within the game remain consistent with their expectations. For example, if the camera cuts from a rear view to a side view, the direction in which the player pushes the control stick should adjust to that new direction as well. This recalibration process can often involve real-time or near real-time adjustments.

A well-implemented fully controlled camera system with dynamic control scheme adjustment can allow players to remain immersed in the game without having to consciously be mindful of how to adjust their inputs or reorient themselves after each camera cut. Often, this fluidity can be natural to players, even during high-action sequences or complex maneuvers, where consistent control is vital for maintaining gameplay flow and enjoyment.

However, there may be times when a player does not immediately adjust to a new control scheme. In this instances, a delay or pause in the control scheme change can occur. In some embodiments, the new control scheme may not be applied until the system detects that the player has changed their input patterns to correspond to the new control scheme. In additional embodiments, telemetry data or other historical data associated with the player can be used to generate a lag or delay in applying new control schemes. In this way, a seamless experience can be achieved, even if the player is not reacting instantaneously.

Finally, in various embodiments, the player or players can provide hints or indications that they desire to have the camera switch to a specific location within the game environment. While a fully controlled camera system may not have a direct override button or control, these hints can be utilized to weigh or otherwise influence the scores generated for each of the available camera points in an environment such that the "desired" camera view is still selected, thus providing players with satisfaction during gameplay.

In various embodiments, the fully controlled camera systems described herein can be processed, operated, or otherwise controlled by one or more machine-learning methods. As described in more detail below, control schemes can be dynamically changed within an interactive game, especially in response to a camera cut and/or perspective shift. These new perspectives can have different types of relative controls. Each relative control scheme can be switched based on specific inputs, such as detecting when a player has shifted their inputs based on the changed perspectives. Based on predetermined thresholds, the control scheme of the player can shifted automatically between a first and updated second control scheme in such a way that player continuity is preserved. One or more machine-learning processes can be utilized to generate associated scores, determine player input shifts, and/or evaluating if a relative control scheme shift should occur, etc.

Those skilled in the art will recognize that a feature vector can be understood as an n-dimensional vector of numerical features that represent some object or game state within the interactive environment. In machine learning and pattern recognition contexts, this vector serves as the primary input for algorithms, transforming diverse and complex raw data-such as the player's health percentage, the number of enemies on screen, or the coordinate position of a character-into a mathematical format that a neural network can process. Each element within the vector corresponds to a specific variable or attribute of the observed phenomenon, and these values are often normalized to a standard range, such as between zero and one, to ensure that no single feature disproportionately influences the model's output due to scale differences. By converting the game state context into a feature vector, the system abstracts the immediate "chaos" of gameplay into a structured set of data points that can be analyzed to find patterns, such as identifying when a player is likely to be confused by a camera cut.

In various embodiments, the construction of a feature vector involves a process of feature engineering where relevant data is selected, and irrelevant noise is discarded to improve model efficiency. For example, while the color of a character's shirt might be irrelevant to adaptation time, the velocity of the character and the angle of the camera change are likely critical predictive factors that would be included in the vector. This vectorization process allows the system to handle categorical data, such as the "type" of weapon equipped, by using techniques like one-hot encoding to convert labels into binary vector components. Furthermore, the dimensionality of the feature vector-meaning the number of features it contains-directly impacts the computational resources required; therefore, the system may employ dimensionality reduction techniques to create a compact yet information-rich vector that allows for real-time predictions without causing frame rate drops during gameplay.

Often, a frustum can be understood as the specific three-dimensional region of space that is visible to the virtual camera at any given moment, effectively defining what the player sees on the screen. Geometrically, it is shaped like a pyramid with the top cut off parallel to the base, where the apex of the pyramid represents the position of the camera lens and the base represents the furthest point the camera can see. The boundaries of this viewing volume are defined by the camera's field of view angle, the aspect ratio of the display, and two parallel planes known as the near clipping plane and the far clipping plane. Any game object or character located inside this volume is rendered and displayed to the player, while objects outside of it are typically culled or ignored by the rendering engine to save processing power.

In many embodiments, the dimensions and orientation of the frustum are critical data points for the virtual editor logic when calculating the scoring for potential camera angles. When the system evaluates a potential cut, it projects the frustum of the candidate camera to determine if key elements, such as the player character or a hidden item, fall within its bounds and are not obstructed by environmental geometry. This calculation ensures that a selected camera point actually captures the intended subject matter rather than staring at a blank wall or empty space. Additionally, understanding the frustum allows the system to determine relative directions; for instance, identifying which direction is "forward" or "right" relative to the screen requires knowing how the frustum is oriented within the global coordinate system of the game world.

Typically, ground truth refers to the accuracy of the training set's classification for supervised learning techniques, representing the reality that the machine learning model aims to predict or emulate. In the context of player adaptation models, ground truth is not a theoretical value but is derived from the actual, observed behavior of players during historical gameplay sessions, such as the measured time it took a player to correct their input after a specific camera cut. This empirical data serves as the standard against which the model's predictions are measured during the training phase; the difference between the model's predicted output and the ground truth is calculated as an "error" or "loss," which the network attempts to minimize via backpropagation.

In further embodiments, the collection of ground truth data is an ongoing process facilitated by telemetry, allowing the system to continuously refine its accuracy over the lifecycle of the game. For example, if the model predicts a player will need 300 milliseconds to adapt, but the telemetry records a ground truth value of 800 milliseconds for that specific transition, this discrepancy is flagged as a high-value training example to correct the model's weights. By relying on ground truth derived from millions of actual player interactions rather than hard-coded assumptions, the system can evolve to account for unexpected behaviors or emerging playstyles. This ensures that the "intelligence" of the system remains grounded in the actual user experience, preventing the fully controlled camera system from becoming detached from the reality of how the game is actually played.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

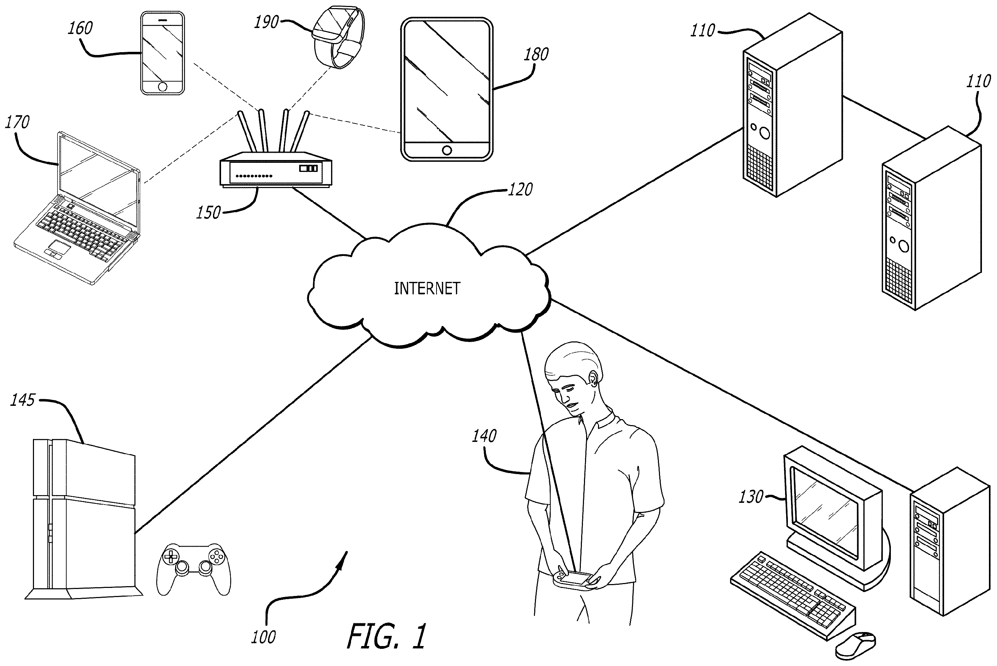

Referring to FIG. 1, a video game ecosystem 100 in accordance with various embodiments of the disclosure is shown. In many embodiments, the game can be designed to seamlessly integrate and function across various devices, including servers 110, home gaming consoles 145, mobile gaming consoles 140, laptops 170, personal computers 130, tablets 180, smartphones 160, wearable devices 190, and more. This integration can ensure a consistent and optimized gaming experience, regardless of the device being used.

In some embodiments, the game can be developed using a modular architecture, enabling compatibility and scalability across multiple platforms. The core game logic, assets, and the camera system may be abstracted into platform-agnostic modules. These modules can be encapsulated in a game engine designed to handle platform-specific requirements dynamically. As those skilled in the art will recognize, certain embodiments, such as games that require a client/server relationship may require one or more aspects of the game to be processed server-side in one or more of the servers 110.

In a number of embodiments, distribution of the game across the various platforms may leverage cloud-based infrastructure, enabling seamless delivery of game content to end-users. Upon release, the game can be hosted on central servers 110 equipped with, or working in conjunction with, content delivery networks (CDNs) to minimize latency and ensure quick access. Players may download the game client tailored to their specific device. For home gaming consoles and personal computers, distribution can be through established digital storefronts, such as the PlayStation Network, Xbox Live, Steam, and others. Mobile and tablet versions may be available via app stores like Google Play and Apple's App Store. Additionally, wearable devices and newer platforms can access the game through dedicated portals or companion apps.

In various embodiments, upon installation, the game may communicate with central servers 110 to authenticate users, sync progress, and manage in-game assets. In some embodiments, for instance, on higher-performance home gaming consoles 145 and PCs 130, the game may provide high-resolution, dynamic range views with advanced effects like depth of field and motion blur. On mobile devices and tablets, the camera system can optimize for performance, ensuring smooth gameplay while maintaining visual fidelity.

Certain embodiments of the ecosystem 100 may allow for cross-platform play, allowing users to interact and play together regardless of the device they are using. This architecture can support this by maintaining a unified player database and real-time synchronization of game states. In various embodiments, the camera system can adjust its parameters, scores, or views based on the device in use or the current state of other players within the online game, ensuring a consistent gameplay experience.

In more embodiments, updates can be distributed through the same channels as the original game, ensuring that all devices receive the latest features, bug fixes, and improvements simultaneously. The fully controlled camera system and any associated logic, being a part of the gameplay experience, may also receive regular updates and telemetry data to enhance functionality and performance based on user feedback and advancements in technology.

In additional embodiments, the ecosystem 100 can include one or more servers 110 that can play a role in ensuring smooth operation, synchronization, and management of the game across various devices. The server 110 can be configured to handle various operations such as, but not limited to, user authentication, ensuring that only legitimate users can access the game. This process may involve verifying login credentials and managing user sessions. Additionally, the server 110 can manage authorization, determining what resources and features each user is permitted to access based on their account type and progress within the game.

In further embodiments, the server 110 can maintain the game's overall state, ensuring consistency and synchronization across all connected devices. This may involve tracking player progress, in-game events, and real-time interactions. For multiplayer scenarios, the server 110 can ensure that all players experience the same game state, coordinating actions and updates to maintain a seamless multiplayer experience.

In still more embodiments, servers 110 can be responsible for delivering game content, including initial game files, updates, patches, and downloadable content (DLC). They may utilize content delivery networks (CDNs) to distribute these files efficiently, reducing latency and ensuring that players can quickly access and download necessary game data. In multiplayer games, the server 110 can manage matchmaking, pairing players based on their skill levels, preferences, and other criteria. Once matched, the server 110 may establish and manage game sessions, ensuring that players are connected to the appropriate game instances and maintaining the integrity of these sessions.

The server 110 may also be configured to store and manages all necessary game data, including user profiles, game progress, leaderboards, and in-game statistics. This data can be stored in secure databases and accessed and updated as needed to reflect players' actions and achievements within the game. To maintain a fair gaming environment, various embodiments of the server 110 can implement security measures and anti-cheat systems. These measures can be configured to detect and prevent unauthorized modifications, hacks, or exploits that could disrupt the game's balance or give certain players unfair advantages.

Servers 110 can also collect and analyze data related to game performance, user behavior, and system health. This information may be used to monitor the game's performance, identify and address issues, and inform future updates and improvements. Analytics can also help in understanding player engagement and preferences, guiding the development of new features and content. In yet additional embodiments, the server 110 can facilitate social features, such as friend lists, messaging, and in-game communities. It can sometimes manage interactions between players, supports communication channels, and ensures that social features are integrated seamlessly into the gaming experience. To handle varying numbers of concurrent players, the server 110 can be designed to have a scalable infrastructure. This may include utilizing load balancing techniques to distribute the workload evenly across multiple servers, ensuring consistent performance and preventing any single server from becoming a bottleneck.

In many embodiments, the ecosystem 100 may utilize the internet 120 and wireless network devices like routers 150 to efficiently deliver data across various devices, ensuring seamless connectivity and gameplay. For wireless devices, such as mobile gaming consoles 140, tablets 180, and wearable devices 190, the router 150 can provide Wi-Fi connectivity. Modern routers support high-speed wireless standards like Wi-Fi 6, which offer faster data rates, lower latency, and improved handling of multiple devices simultaneously. This can ensure a stable and efficient connection for gaming, even in households with numerous connected devices.

As the game operates, data packets are transmitted between the player's device and the servers 110. These packets may include user inputs, game state updates, and synchronization data. The router 150 can handle the routing of these packets, directing them to their destination through the internet. Advanced Quality of Service (QoS) settings on routers can prioritize gaming traffic to ensure minimal latency and reduced lag, enhancing the gaming experience. During multiplayer sessions, the router 150 can play a role in maintaining a stable connection. It manages data traffic between multiple players, ensuring that game state updates and player interactions are synchronized in real-time. The ecosystem 100 can also be configured to utilize peer-to-peer (P2P) networking in conjunction with traditional client-server models. In P2P setups, game data may be shared directly between players' devices, reducing the load on central servers and improving data transfer speeds. The router 150 can, in certain embodiments, facilitate these direct connections, ensuring that data packets are correctly routed between peers.

In a number of embodiments, a PC 130 can download the game/game client from a digital storefront from one or more servers 110. Once installed, the game client can connect to the game's servers 110 via the internet 120, authenticating the user and syncing their game data. In certain embodiments, the PC 130 can also interact with other devices in the ecosystem 100. For example, a player might use a mobile app on their tablet 180 or smartphone 160 to manage their game inventory or chat with friends while playing on their PC 130. These interactions can be facilitated by one or more servers 110, which can synchronize data across all connected devices, ensuring a unified and cohesive gaming experience.

As those skilled in the art will recognize, home gaming consoles 145 are often specifically designed for gaming, providing a consistent and optimized experience without the need for extensive configuration. In various embodiments, home gaming consoles 145 frequently include social and community features that are tightly integrated into the ecosystem 100. Players can easily add friends, join parties, and communicate through voice or text chat. Additionally, game content distribution on home gaming consoles 145 often involves digital storefronts. In additional embodiments, consoles are designed to work seamlessly with various peripherals and accessories, such as controllers, headsets, and virtual reality (VR) devices.

In further embodiments, a mobile gaming console 140 has a design emphasizing portability, featuring a compact form factor, built-in display, and rechargeable battery. This allows players to continue their gaming sessions seamlessly when moving between different locations. In various embodiments, the game client and associated game logic on the mobile gaming console is optimized to handle the specific hardware and connectivity characteristics of these devices, ensuring smooth performance and efficient battery usage.

The mobile gaming console 140 can also connect to other devices through companion apps or cloud gaming services. For example, a player might use a mobile app on their console 140 to manage in-game items or communicate with friends, synchronizing this data with their main game profile on the servers 110. In certain embodiments, cloud gaming services can allow the mobile gaming console 140 to stream games from powerful servers 110, bypassing the need for high-end local hardware and ensuring access to graphically intensive games that would otherwise be beyond the device's capabilities.

Furthermore, mobile gaming consoles 140 can often support local multiplayer gaming through ad-hoc networks or Bluetooth connections. This may allow players to connect directly with other nearby mobile gaming consoles 140 for shared gaming experiences without relying solely on the internet. The servers 110 can then sync any local multiplayer progress with the broader ecosystem 100 once the devices reconnect to the internet 120.

Unlike stationary PCs 130, laptops 170, can be used in various environments, from home to public spaces. Many gaming laptops 170come with dedicated GPUs, allowing for high-quality graphics and smooth gameplay. Laptops 170 may also support various peripheral connections, including external displays, gaming controllers, and VR headsets, expanding their gaming capabilities.

In more embodiments, smartphones 160 can offer unique features like GPS, accelerometers, gyroscopes, and cameras, which can be integrated into gameplay to provide augmented reality (AR) experiences and location-based gaming. Touchscreens are often standard on smartphones 160, facilitating intuitive controls and gestures. The ubiquity of smartphones 160 can ensure that players can engage with the game ecosystem wherever they are, and mobile-specific features like notifications keep players connected to in-game events and updates. Additionally, smartphones 160 may often include biometric security features such as fingerprint scanners and facial recognition, enhancing secure access to game accounts and in-game purchases.

In numerous embodiments, wearable devices 190, such as, but not limited to, smartwatches and AR glasses, can add a layer of interaction that extends beyond traditional gaming platforms. These devices can provide real-time notifications, health tracking, and context-sensitive interactions based on the player's environment. For example, a smartwatch might track physical activity during a fitness game, providing feedback and integrating physical activity into the gaming experience. In another example, AR glasses can overlay game elements onto the real world, creating immersive and interactive experiences that blend reality with the virtual game environment. Wearable devices 190 may also enable continuous engagement with the ecosystem 100 through haptic feedback and voice commands, allowing players to interact without needing to look at a screen.

In still more embodiments, tablets 180 can offer a larger screen size than smartphones while maintaining portability, making them ideal for immersive gameplay on the go. Tablets 180 may be configured to support both touch and stylus input, providing precise control options for games that require fine-tuned interactions. They may also be excellent for split-screen or multi-window functionality, enabling players to run multiple apps simultaneously, such as a game and a companion app. Tablets 180 can easily connect to external peripherals like keyboards and game controllers, bridging the gap between mobile and traditional gaming setups.

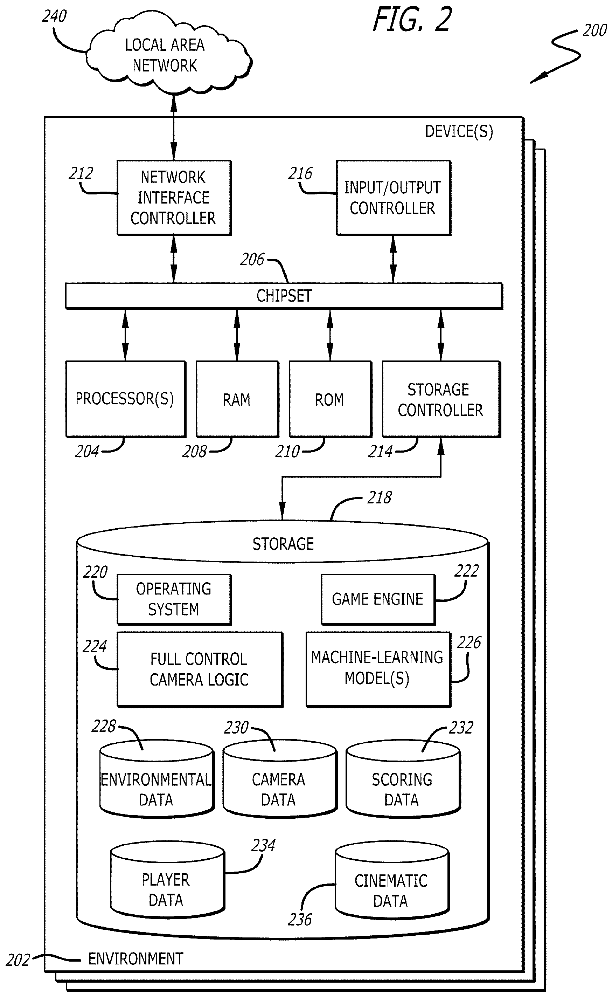

Although a specific embodiment for a video game ecosystem 100 is described above with respect to FIG. 1, any of a variety of systems and/or processes may be utilized in accordance with embodiments of the disclosure. For example, the video game ecosystem 100 may be configured into any number of various network topologies including different types of interconnected devices and user devices. The elements depicted in FIG. 1 may also be interchangeable with other elements of FIGS. 2-17 as required to realize a particularly desired embodiment.

Referring to FIG. 2, a conceptual block diagram of a device 200 suitable for configuration with a full control camera logic 224, in accordance with various embodiments of the disclosure is shown. The embodiment of the conceptual block diagram depicted in FIG. 2 can illustrate a conventional game device, personal computer, mobile game device, game server, laptop, tablet, network appliance, e-reader, smartphone, wearable device, or other computing device, and can be utilized to execute any of the application and/or logic components presented herein. The device 200 may, in many non-limiting examples, correspond to physical devices or to virtual resources described herein.

In many embodiments, the device 200 may include an environment 202 such as a baseboard or "motherboard," in physical embodiments that can be configured as a printed circuit board with a multitude of components or devices connected by way of a system bus or other electrical communication paths. Conceptually, in virtualized embodiments, the environment 202 may be a virtual environment that encompasses and executes the remaining components and resources of the device 200. In more embodiments, one or more processors 204, such as, but not limited to, central processing units ("CPUs") can be configured to operate in conjunction with a chipset 206. The processor(s) 204 can be standard programmable CPUs that perform arithmetic and logical operations necessary for the operation of the device 200.

In a number of embodiments, the processor(s) 204 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 206 may provide an interface between the processor(s) 204 and the remainder of the components and devices within the environment 202. The device 200 can incorporate different types of processors to enhance performance and efficiency across various tasks. A central processing unit (CPU) can handle primary processing tasks such as game logic, AI, and player inputs, while a graphics processing unit (GPU) can be specialized for rendering high-resolution graphics and visual effects. Digital signal processors (DSPs) may manage audio processing, delivering high-quality sound without burdening the CPU. In portable devices, systems on a chip (SoCs) can be configured to integrate the CPU, GPU, memory, and peripherals to balance performance and efficiency. In some embodiments, application-specific integrated circuits (ASICs) can optimize specific functions like cryptographic processing, while neural processing units (NPUs) accelerate AI and machine learning tasks. Some high-end devices may also include physics processing units (PPUs) to handle complex physics calculations, further enhancing the realism and responsiveness of the gaming experience. However, those skilled in the art will recognize that the device 200 can any variety or combination of processor(s) 204 as needed to satisfy the desired application.

The chipset 206 can provide an interface to a random-access memory ("RAM") 208, which can be used as the main memory in the device 200 in some embodiments. The chipset 206 can further be configured to provide an interface to a computer-readable storage medium such as a read-only memory ("ROM") 210 or non-volatile RAM ("NVRAM") for storing basic routines that can help with various tasks such as, but not limited to, starting up the device 200 and/or transferring information between the various components and devices. The ROM 210 or NVRAM can also store other application components necessary for the operation of the device 200 in accordance with various embodiments described herein.

Additional embodiments of the device 200 can be configured to operate in a networked environment using logical connections to remote computing devices and computer systems through a network, such as the local area network 240. The chipset 206 can include functionality for providing network connectivity through a network interface controller ("NIC") 212, which may comprise a gigabit Ethernet adapter or similar component. The NIC 212 can be capable of connecting the device 200 to other devices over the local area network 240. It is contemplated that multiple NICs 212 may be present in the device 200, connecting the device to other types of networks and remote systems, such as the Internet.

In further embodiments, the device 200 can be connected to a storage 218 that provides non-volatile storage for data accessible by the device 200. The storage 218 can, for instance, store an operating system 220, and/or game engine 222. In various embodiments, the storage 218 can be connected to the environment 202 through a storage controller 214 connected to the chipset 206. In certain embodiments, the storage 218 can consist of one or more physical storage units. The storage controller 214 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

In additional embodiments, the device 200 can store data within the storage 218 by transforming the physical state of the physical storage units to reflect the information being stored. The specific transformation of physical state can depend on various factors. Examples of such factors can include, but are not limited to, the technology used to implement the physical storage units, whether the storage 218 is characterized as primary or secondary storage, and the like.

In many more embodiments, the device 200 can store information within the storage 218 by issuing instructions through the storage controller 214 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. In some embodiments, the device 200 can further read or access information from the storage 218 by detecting the physical states or characteristics of one or more particular locations within the physical storage units.

In addition to the storage 218 described above, certain embodiments of the device 200 may also have access to other computer-readable storage media to store and retrieve information, such as program modules, data structures, or other data. It should be appreciated by those skilled in the art that computer-readable storage media is any available media that provides for the non-transitory storage of data and that can be accessed by the device 200. In some examples, operations performed by a cloud computing network, and or any components included therein, may be supported by one or more devices similar to device 200. Stated otherwise, some or all of the operations performed by the cloud computing network, and or any components included therein, may be performed by one or more devices 200 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 218 can store an operating system 220 utilized to control the operation of the device 200. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 218 can store other system or application programs and data utilized by the device 200.

In many additional embodiments, the storage 218 or other computer-readable storage media is encoded with computer-executable instructions which, when loaded into the device 200, may transform it from a general-purpose computing system into a special-purpose computer capable of implementing the embodiments described herein. These computer-executable instructions may be stored as application and transform the device 200 by specifying how the processor(s) 204 can transition between states, as described above. In some embodiments, the device 200 has access to computer-readable storage media storing computer-executable instructions which, when executed by the device 200, perform the various processes described above with regard to FIGS. 1 and 3-17. In certain embodiments, the device 200 can also include computer-readable storage media having instructions stored thereupon for performing any of the other computer-implemented operations described herein.

In a number of embodiments, the device 200 can store a game engine 222 in storage 218 and load it when the game is launched, enabling quick access and execution. The game engine 222 can manage core tasks such as rendering graphics, processing inputs, handling physics calculations, and managing audio by leveraging the device's CPU, GPU, and other hardware components. It can abstract hardware complexities to ensure smooth gameplay and real-time interaction. Additionally, in various embodiments, the game engine 222 cam facilitate network communications for multiplayer interactions and supports cross-platform functionality, allowing games to run efficiently on various devices within the available game ecosystem.

In many further embodiments, the device 200 may include a full control camera logic 224. The full control camera logic 224 can be configured to perform one or more of the various steps, processes, operations, and/or other methods that are described above. Often, the full control camera logic 224 can be a set of instructions stored within a non-volatile memory that, when executed by the processor(s)/controller(s) 204 can carry out these steps, etc. In some embodiments, the full control camera logic 224 may be a client application that resides on a network-connected device, such as, but not limited to, a server, switch, personal or mobile computing device in a single or distributed arrangement.

In some embodiments, environmental data 228 can comprise various sub-data types point of interest data, environmental dimension data, play area data, and/or camera location data. In various embodiments, point of interest data can be utilized to highlight key objects or characters that the camera should focus on, ensuring that important elements are always in view. Environmental dimension data may provide the spatial parameters of the game environment that is being evaluated and/or rendered, allowing the camera to navigate and position itself accurately within that three-dimensional space. Play area data can be configured to define the boundaries and active regions where the player can move and/or gameplay can occur, helping the camera maintain optimal angles. Camera location data may include information about the current and potential positions of the camera, enabling dynamic adjustments to provide the best perspectives and avoid obstacles.

In various embodiments, player data 234 can comprise player type data as player movement data, among others. Player type data can be configured to describe one or more attributes related to the player and their current avatar or move set. For example, a player may have either a short-range attack or a long-range attack, which can be captured within the player type data. Similarly, play movement data may allow for the capture of characteristics to how the player may be able to move within a given game environment (running, walking, jumping abilities, etc.).

In more embodiments, camera data 230 may be utilized by a fully controlled camera system to facilitate the automatic management of camera movements for enhancement of the player's experience without requiring manual input. In some embodiments, the camera data 230 may comprise lens data for capturing information about focal length, aperture, depth of field, and the like, suitable for simulating real-world camera effects. Movement data can track and capture the camera's position and motion through the game environment. Base score data can include a base line score that each camera starts from when calculating a score for virtual editing. Framing data can ensures that key elements and characters are appropriately centered and visible within the frame. Camera type data may be configured to define the specific camera model or style being simulated, such as a handheld, Steadicam, cinematic, camcorder, drone camera, etc. Cameraman data can simulate or describe any human-operated camera movements, noise, or attributes to simulate a human camera operator, adding a layer of realism by mimicking how a person would handle the camera. Finally, camera weight data can account for the physical characteristics of the camera, influencing its inertia and how it responds to movements, contributing to a more authentic visual experience.

In further embodiments, scoring data 232 can include various sub-types of data including, but not limited to framing score data, player preference data, and update data. Framing score data can include various weights and items that can be utilized when generating a score for an associated camera point within a game environment. In some embodiments, player preference data can include data associated with one or more known player preferences, which can be captured from previous or historical gameplay, or "hints" provided to the game system, such as controller interactions. Finally, update data may provide one or more modifications to the weights utilized in one or more cameras or camera points when generating a score. For example, a certain camera within a game environment may never be selected due to the initial configuration of weights. Update data may allow for the modification of those weights such that the camera becomes a viable option for automatic cutting.

In still more embodiments, cinematic data 236 can include various heuristic data and telemetry data. As described in more detail below, heuristic data can include one or more heuristics associated with various cinematography or photography practices. In some embodiments, the heuristic data can be manually fine-tuned for a specifically desired game experience. However, as games are released and played by various players, telemetry data may be generated that gathers and otherwise transmits data related to various playthroughs done by players. In this way, the telemetry data can be used to update the game as desired by the game designers. For example, the telemetry data may indicate that players largely miss finding a particular hidden item in a gaming environment because a certain camera point is never selected. Utilizing this telemetry data, updates to the weights of the cameras within that gaming environment can be deployed such that more players may find that hidden item in the game.

In still further embodiments, the device 200 can also include one or more input/output controllers 216 for receiving and processing input from a number of input devices, such as a keyboard, a mouse, a touchpad, a touch screen, an electronic stylus, or other type of input device. Similarly, an input/output controller 216 can be configured to provide output to a display, such as a computer monitor, a flat panel display, a digital projector, a printer, or other type of output device. Those skilled in the art will recognize that the device 200 might not include all of the components shown in FIG. 2 and can include other components that are not explicitly shown in FIG. 2 or might utilize an architecture completely different than that shown in FIG. 2.

As described above, the device 200 may support a virtualization layer, such as one or more virtual resources executing on the device 200. In some examples, the virtualization layer may be supported by a hypervisor that provides one or more virtual machines running on the device 200 to perform functions described herein. The virtualization layer may generally support a virtual resource that performs at least a portion of the techniques described herein.

Finally, in numerous additional embodiments, data may be processed into a format usable by one or more machine-learning models 226 (e.g., feature vectors), and or other preprocessing techniques. The machine-learning ("ML") models 226 may be any type of ML model, such as supervised models, reinforcement models, and/or unsupervised models. The ML models 226 may include one or more of linear regression models, logistic regression models, decision trees, Naïve Bayes models, neural networks, k-means cluster models, random forest models, and/or other types of ML models 226.

The ML model(s) 226 can be configured to generate inferences to make predictions or draw conclusions from data. An inference can be considered the output of a process of applying a model to new data. This can occur by learning from at least the environmental data 228, the camera data 230, the scoring data 232, the player data 234 and/or the cinematic data 236. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a set of coordinates within a three-dimensional space, a probability distribution, a set of labels/characteristics/parameters, a decision about an action to take, etc. Ground truth for the ML model(s) 226 may be generated by human/administrator verifications or may compare predicted outcomes with actual outcomes.

Although a specific embodiment for a device suitable for configuration with the full control camera logic suitable for carrying out the various steps, processes, methods, and operations described herein is discussed with respect to FIG. 2, any of a variety of systems and/or processes may be utilized in accordance with embodiments of the disclosure. For example, the device 200 may be in a virtual environment such as a cloud-based game administration environment, or it may be distributed across a variety of network devices or servers. The elements depicted in FIG. 2 may also be interchangeable with other elements of FIGS. 1 and 3-17 as required to realize a particularly desired embodiment.

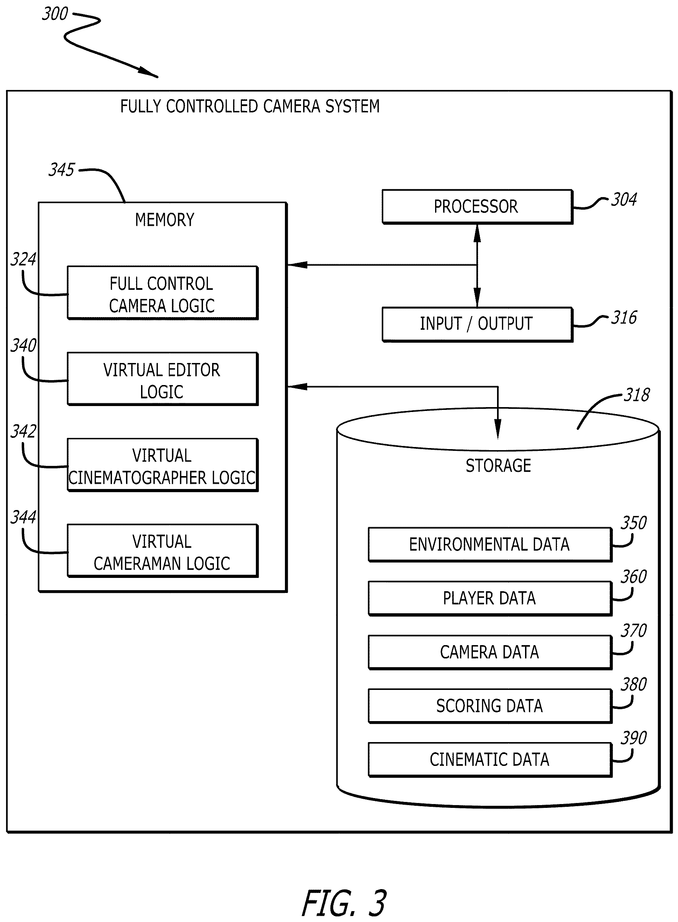

Referring to FIG. 3, an abstract block diagram of the components of a fully controlled camera system 300 in accordance with various embodiments of the disclosure is shown. In many embodiments, the fully controlled camera system 300 can be configured to include at least one or more processors 304, input/output functionality 316, a storage 318 as well as a memory 345 configured for executing one or more various logics. Specifically in the embodiment depicted in FIG. 3, the memory 345 comprises a full control camera logic 324 as well as a virtual editor logic 340, virtual cinematographer logic 342, and a virtual cameraman logic 344. Similarly, the storage 318 may comprise environmental data 350, player data 360, camera data 370, scoring data 380, and cinematic data 390.

In some embodiments, the full control camera logic 324 can facilitate the use of a camera system within a video game that is fully controlled by the system without input from the player. In certain embodiments, the full control camera logic 324 can work in conjunction with various other logics, such as a virtual editor logic 340, virtual cinematographer logic 342 and virtual cameraman logic 344. These logics may be configured as separate logics or may be interconnected or packaged/executed as a single logic.

In many embodiments, a virtual editor logic 340 in a fully controlled camera system 300 may consist of heuristics and rules designed to automatically adjust camera settings and movements to optimize the visual presentation of the game. This logic can analyze real-time game data and predefined criteria to make dynamic decisions about camera angles, transitions, and framing. Components of this analysis may include scene analysis, where the system evaluates the current context, such as the position of characters, action intensity, and environmental features, and the like. It could then use this analysis to choose the most appropriate camera angle and movement style, ensuring that important actions and details are highlighted effectively. In certain embodiments, this analysis may be done by evaluating different scores attached or otherwise associated with each available camera point within a gaming environment.

In a number of embodiments, a virtual cinematographer logic 342 may consist of heuristics and decision-making processes designed to simulate the artistic choices made by a human cinematographer. The virtual cinematographer logic 342 may, in various embodiments, analyze real-time game data and pre-defined cinematic rules to automatically control camera angles, movements, and transitions, enhancing the storytelling and gameplay experience. This logic may incorporate various data inputs, such as lens data, movement data, base score data, framing data, camera type data, cameraman data, and camera weight data, to create visually appealing and contextually appropriate scenes.

In more embodiments, the virtual cinematographer logic 342 can dynamically adjust the camera or selection of a pre-established camera point based on in-game events, character actions, and environmental cues. For example, it could switch to a close-up during a dramatic dialogue, pan to follow a fast-moving character, or adopt a wide-angle shot to showcase expansive landscapes or other points of interest. In further embodiments, the virtual cinematographer logic 342 may also account for cinematic techniques such as rule of thirds, leading lines, and depth of field to ensure aesthetically pleasing compositions. Additionally, this logic would manage transitions between different camera angles and movements smoothly, maintaining continuity and immersion.

In yet more embodiments, a virtual cameraman logic 344 may comprise a set of heuristics and rules designed to mimic the decisions, sounds, and movements of a human cameraman, creating a dynamic and immersive visual experience. This logic can process various types of camera data 370, such as lens settings, movement parameters, and framing preferences, to determine the best camera angles and transitions in real-time. In certain embodiments the virtual cameraman logic 344 may utilize the game's context, such as the player's actions, environmental changes, and narrative elements, to adjust the camera's position and orientation realistically.

The virtual cameraman logic 344 may also incorporate elements like camera type and cameraman data to simulate different styles of camera work, such as steady shots, handheld movements, or dramatic zooms and pans. Additionally, certain embodiments of the virtual cameraman logic 344 can evaluate can incorporate sounds and other action or indications that a real person is behind the game camera, increasing the overall level of realism within the game scene.

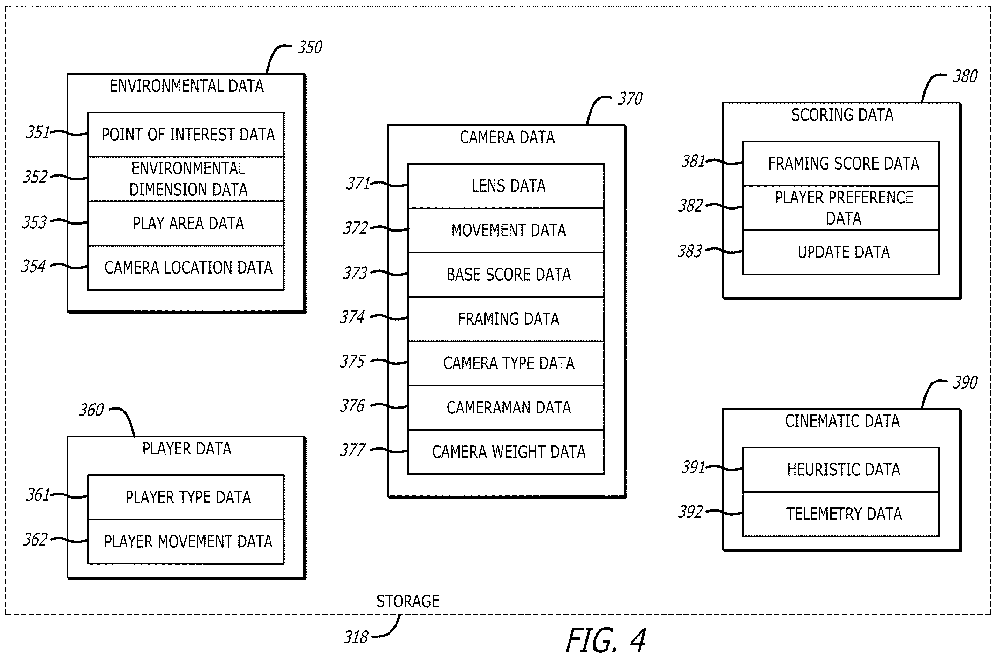

As discussed above in the embodiment depicted in FIG. 2, and in more detail below in the embodiment depicted in FIG. 4, the fully controlled camera system 300 may include a number of different types of available data to work with. These data may include environmental data 350 that can capture various aspects of the gaming environment being rendered and utilized. There may also be player data 360 that can describe different attributes of the player and their current avatar. Camera data 370 can be configured to provide various types of information related to how a camera may be set up, moved, and selected within a gaming environment. Scoring data 380 can help guide the system to determine what the correct or optimal score would be for each camera. Finally, cinematic data 390 can provide any specific heuristic or telemetry data that can better indicate what camera would be best be selected in a fully controlled camera system 300.

Although a specific embodiment for an abstract block diagram of the components of a fully controlled camera system 300 suitable for carrying out the various steps, processes, methods, and operations described herein is discussed with respect to FIG. 3, any of a variety of systems and/or processes may be utilized in accordance with embodiments of the disclosure. For example, the memory 345 can be an active memory that has the logics loaded/configured and is currently executing the various steps, processes, and/or methods described herein. In some embodiments, the memory 345 may be in a virtual environment such as a cloud-based game administration environment, or it may be distributed across a variety of network devices or servers. The elements depicted in FIG. 3 may also be interchangeable with other elements of FIGS. 1-2 and 4-17 as required to realize a particularly desired embodiment.

Referring to FIG. 4, an abstract block diagram of the data within a storage 318 of a fully controlled camera system in accordance with various embodiments of the disclosure is shown. In many embodiments, environmental data 350 may comprise various sub-types of data like point of interest data 351, environmental dimension data 352, play area data 353, and/or camera location data 354. However, as those skilled in the art will recognize, many other types of data may be included as well depending on the specific game and/or application.

In a number of embodiments, point of interest data 351 can include elements within the game environment that the camera should focus on or highlight. This data can encompass characters, significant objects, and interactive elements that are crucial to the gameplay or narrative. It may also include dynamic events, such as explosions, actions performed by the player or non-player characters, and environmental changes like weather effects. Additionally, point of interest data 351 may take into account contextual cues, such as dialogue or mission objectives, such that the camera may capture the most relevant and engaging aspects of the scene. This data can be formatted in a number of ways but may be a list of coordinates within a three-dimensional space and a corresponding value or score.

In more embodiments, environmental dimension data 352 can be configured as information about the game world's spatial and contextual characteristics. This data may include the size, shape, and layout of various game environments, such as rooms, outdoor areas, and obstacle placements, which helps the camera system navigate and frame scenes effectively. It can also comprise the dynamic elements within the environment, like moving objects, lighting conditions, and weather effects, to adjust camera settings and movements accordingly. Additionally, environmental dimension data 352 may account for interactive elements and potential player actions within these spaces, ensuring that the camera can anticipate and smoothly follow the player's movements while maintaining optimal angles and visibility of key gameplay moments.

In additional embodiments, play area data 353 can comprise various information for determining how a camera may be positioned and moved within the game's environment. This data may also include the spatial dimensions of the game environment where the player may traverse, including, but not limited to, boundaries, obstacles, and key landmarks, which can be utilized to help a camera navigate the environment without clipping through objects or getting obstructed. In certain embodiments, the play area data 353 may also incorporate dynamic elements like the location and movement patterns of characters, enemies, and interactive objects, ensuring they are effectively captured within the frame. Additionally, play area data might include designated points of interest or focal points that the camera should highlight during specific events or actions.

In further embodiments, camera location data 354 may include detailed information about the camera's spatial coordinates within the game environment, its orientation or rotation angles (pitch, yaw, and roll), and its movement vectors. This data can ensure that the camera can dynamically and accurately follow the action, providing optimal viewing angles and perspectives. In certain embodiments, the camera location data 354 may also encompass the camera's distance from the subject, height relative to the ground, and any constraints or boundaries to prevent clipping through objects or environments. Additionally, location data might include predefined waypoints or paths for scripted sequences, ensuring smooth transitions and cinematic shots.

In still more embodiments, player data 360 can include player type data 361 and player movement data 362. Player data 360 may be formatted as a list of attributes or parameters. In some embodiments, the player data 360 be a structure with a set of values that can be interpreted by other logic to implement one or more actions.

In yet further embodiments, player type data 361 may be configured as various attributes and preferences that define the player's or the player's avatar interaction style, skill level, and/or behavior patterns within the game. This data could encompass the player's preferred control settings, such as sensitivity levels for camera movement and specific input configurations. In some embodiments, the player type data 361 may also include information about the player's skill level, which can be inferred from gameplay statistics like reaction times, accuracy, and completion rates. Additionally, player type data 361 could track behavioral patterns, such as tendencies to explore, engage in combat, or focus on story-driven elements.

In still additional embodiments, player movement data 362 can comprise a comprehensive set of information detailing the player's actions and position within the game environment. In certain embodiments, this data may encompass the player's coordinates (X, Y, Z) in a three-dimensional virtual world for example, as well as direction and speed of the movement, and any changes in posture or stance (such as crouching, jumping, or lying prone). It may also include the player's interaction with the environment, such as climbing, swimming, or using objects. Additionally, player movement data 362 may capture or otherwise be modified to reflect input from controllers or keyboards, or other in-game actions.

In many embodiments, camera data 370 may include data related to the virtual camera rendering the game environment, such as, but not limited to, lens data 371, movement data 372, framing data 374, camera type data 375, cameraman data 376, and camera weight data 377. In various embodiments, other factors related to the camera, such as the base score data 373 can reflect a minimum score level for evaluation of a camera by a virtual editor logic.

In a number of embodiments, lens data 371 may comprise several elements that can define how the camera captures the visual scene. This may include the virtual focal length, which determines the field of view and how zoomed in or out the image appears. Aperture settings, which can control the depth of field and the amount of light entering the virtual lens, may also be part of lens data 371. Additionally, it can include information about focus distance, which affects how sharp or blurred objects appear at different distances. Lens data 371 might also capture lens distortion parameters to simulate the curvature or warping effects seen with certain types of lenses.

In more embodiments, movement data 372 can be configured as several components that may dictate how the camera transitions and orients itself in the game environment. This can include the camera's position coordinates (X, Y, Z) relative to the scene, ensuring it can move fluidly to follow the action or adjust perspective. It may also encompass the direction and velocity of the camera's movement, determining how quickly and smoothly it can pan, tilt, or zoom to new viewpoints. Additionally, rotational data can specify the camera's orientation in terms of pitch, yaw, and roll, allowing it to angle correctly and maintain a steady focus on important game elements. This data might also include interpolation methods to ensure smooth transitions between different camera positions and angles, as well as collision detection to prevent the virtual camera from passing through objects.

In additional embodiments, base score data 373 can relate to any initial settings or scores that are assigned to specific cameras. As discussed below, received telemetry data 392 and other update data 383 may require adjustment of the base score data 373 for specific virtual camera points within the game environment. In this way, certain issues can be addressed such as a camera failing to trigger in a fully controlled camera game, or a virtual camera being relied on for too long, which can remove some of the realism of that area of the game.

In further embodiments, framing data 374 may be comprised of several elements that can ensure the visual composition is aesthetically pleasing and functionally effective. In some embodiments, the framing data 374 can include the positioning of primary and secondary subjects within the frame, ensuring that key characters, objects, or actions are properly centered or placed according to various cinematic guidelines. Framing data 374 may also involve determining the appropriate zoom level and field of view to capture necessary details while maintaining contextual awareness of the surroundings. Framing data 374 can also be configured to consider the balance and symmetry of visual elements, managing empty space (negative space) around subjects to avoid cluttered or overly sparse scenes. Additionally, in certain embodiments, framing data 374 can take into account dynamic adjustments, such as re-framing during fast movements or significant scene changes, to keep important elements within the viewer's focus consistently.

In still more embodiments, camera type data 375 can comprise various attributes and settings that may define the specific characteristics and behaviors of the camera being simulated within the game. This can include the camera model, which dictates its physical properties such as size, shape, and weight. It may also encompass the type of lenses that may be used, such as wide-angle, telephoto, or fisheye, which affects the field of view and the degree of distortion. Additionally, in certain embodiments camera type data 375 can include preset configurations for different filming styles, such as stationary, handheld, drone, or Steadicam, each with unique movement and stabilization characteristics. This data may also specify the camera's response to environmental factors like lighting conditions and motion, as well as any built-in effects like zoom capabilities or focus adjustments.

In more further embodiments, cameraman data 376 may include, within the context of a virtual cameraman logic, may be comprised of parameters and attributes that simulate the behavior and decisions of a human camera operator. This data can include predefined movement patterns and styles, such as smooth tracking shots, dynamic panning, or quick zooms, based on the narrative or gameplay requirements. It may also encompass reaction times and sensitivity settings to mimic how a real cameraman would adjust to sudden changes in the scene, such as quick player movements or unexpected events. Additionally, cameraman data 376 can include preferences for framing, such as maintaining a certain distance from the player or focusing on specific elements within the environment as well as sound which can be reflected in additions to the game's sound generated during gameplay.

In still additional embodiments, camera weight data 377 can be associated with information that simulates the physical characteristics and inertia of the virtual camera, contributing to more realistic and dynamic camera movements. This data may include the simulated mass of the camera, which affects how it accelerates, decelerates, and responds to movements or changes in direction. It also encompasses the center of gravity and distribution of weight, which influence the balance and stability of the camera. Additionally, camera weight data 377 may account for the damping and friction parameters, which determine how smoothly the camera transitions between movements and how it handles sudden stops or starts.

In numerous embodiments, scoring data 380 can include various types of data that can affect the scoring of each camera within a gaming environment. This may include, for example, framing score data 381, player preference data 382, and update data 383. However, as those skilled in the art will recognize, other types of scoring data 380 may be utilized as needed.

In a number of embodiments, framing score data 381 may comprise an evaluation and ranking for different camera perspectives based on their effectiveness in framing key elements within the gaming environment. This data can be configured to assess the composition of each shot, ensuring that important subjects, such as the player character, NPCs, and significant objects, are properly positioned according to various cinematic principles like the rule of thirds, balance, focus, etc. An analysis of real-time game scenes can be done to assign scores to various camera angles or camera points based on their ability to highlight crucial action or narrative elements clearly and engagingly.

In more embodiments, player preference data 382 can relate to information tailored to individual player choices and habits, influencing how the camera system adjusts to enhance their gaming experience. This data can include preferred camera angles and perspectives, such as a first-person view, third-person over-the-shoulder view, or top-down perspective. These preferences can be communicated in the form of "hints" such as pushing one or more inputs, etc. The player preference data 382 can also take into account the player's adjustments to camera sensitivity and movement speed, reflecting their comfort level and play style. Additionally, player preference data 382 can capture preferred zoom levels, focus points during different gameplay scenarios (combat, exploration, cutscenes), and any specific settings related to camera behavior, such as automatic panning or manual control options.

In further embodiments, update data 383 can comprise information necessary to keep the camera system and overall game experience current and functioning optimally. This may include patches and bug fixes to address any issues or glitches that have been identified in the camera system or game mechanics. It may also encompass new features and enhancements that improve camera control, such as additional camera angles, improved AI for the virtual cameraman. Furthermore, update data may contain adjustments based on player feedback and telemetry data 392, such as refined camera movement to better match player preferences or optimized performance for different hardware configurations.

In additional embodiments, cinematic data 390 may comprise various data related to how virtual cameras can operate to comport with various photographic and cinematography principles, which can make the game experience seem more realistic and/or more cinematic. In some embodiments, the cinematic data 390 may include heuristic data 391 as well as telemetry data 392.

In still more embodiments, heuristic data 391 may include sets of commands, processes, and/or methods related to various principles that can aide in creating a more realistic and cinematic gaming experience. For example, heuristic data 391 may comprise various "if this, then that" transforms that can indicate when various actions should occur in response to other types of input or game states. In certain embodiments, heuristic data 391 may be formatted as an input into one or more machine learning processes for generation of an inference or output.

In yet further embodiments, telemetry data 392 can be associated with data that has been gathered from play tests or other playthroughs of the game by players. As players play the game, each play through may be unique depending on their choices as the player. Over time, this data can be captured in a private (i.e., non-identifying) manner and aggregated into telemetry data 392. This telemetry data 392 can subsequently be utilized to gather insight into the game experience, compare it to a model or desired experience, and generate decisions or update data 383 that can be useful in correcting or otherwise better guiding players through a more optimized game play experience.

Although a specific embodiment for an abstract block diagram of the data within a storage 318 of a fully controlled camera system suitable for carrying out the various steps, processes, methods, and operations described herein is discussed with respect to FIG. 4, any of a variety of systems and/or processes may be utilized in accordance with embodiments of the disclosure. For example, the data types described herein can vary depending on the type of application deployed and/or desired. For example, each specific data type may be concatenated into one data structure or be broken up into multiple additional data structures. Those skilled in the art will recognize that data can be formatted in a variety of ways beyond the specific embodiment depicted in FIG. 4. The elements depicted in FIG. 4 may also be interchangeable with other elements of FIGS. 1-3 and 5-17 as required to realize a particularly desired embodiment.

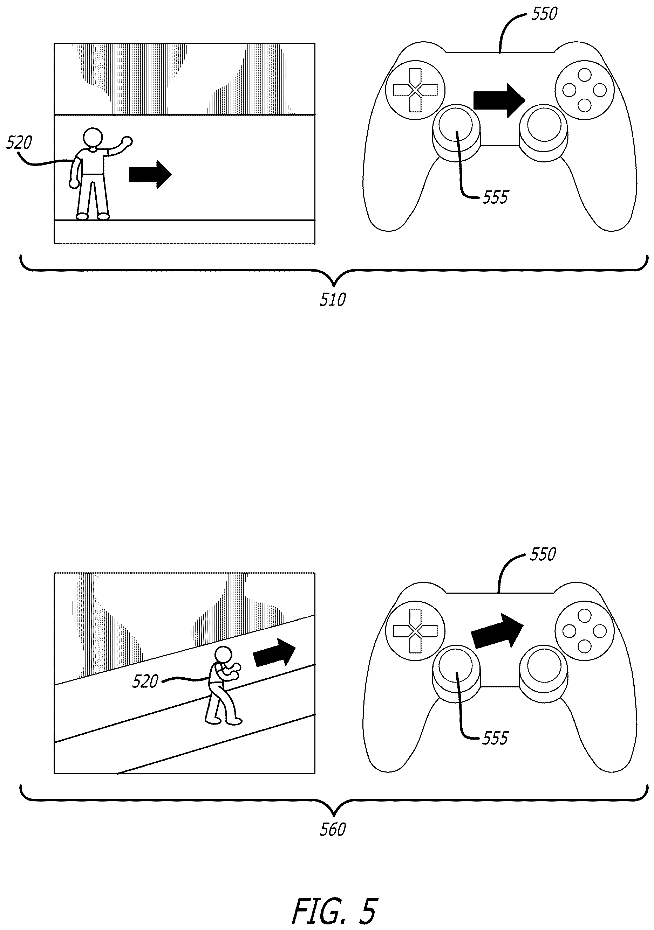

Referring to FIG. 5, a conceptual illustration of automatic relative movement control changes in accordance with various embodiments of the disclosure is shown. In a fully controlled camera system, transitioning between a first control scheme and a second control scheme can involves sophisticated real-time adjustments to ensure seamless and intuitive gameplay. Initially, the first control scheme maps the player's inputs from the controller to movements and actions in the game world. For example, pressing the control stick forward might move the player character forward relative to the camera's current orientation. This control scheme ensures that the player's actions align with their expectations based on the visual feedback from the screen.

When the camera cuts to a second orientation, the system may recalibrate the control inputs to maintain this alignment. This recalibration can involve dynamically adjusting the mapping of the control stick directions to the new camera perspective. In the embodiment depicted in FIG. 5, a first control scheme 510 is applied such that the player's character 520 is moved to the right in response to the player moving or pressing the left control stick 555 of the controller 550 to the right. This control scheme is intuitive as the player's character 520 moves in the same direction as the control stick 555.

However, as the fully controlled camera system conducts a cut within the scene such that a new camera point is selected which has a new orientation, requiring a second control scheme 560. In this control scheme the player must engage the left control stick 555 of the controller 500 in a different manner to get the player's character 520 to keep moving in the same direction. If the player continues to push the left control stick 555 in the same direction under the first control scheme 510, the player's character 520 may not move in the desired direction. As a result, the player must adapt to the transition in control schemes.

In many embodiments, the transition to the second control scheme can be smooth to avoid disorienting the player. The system can continuously track the camera's position and orientation, using algorithms to predict and adjust control inputs accordingly upon a cut in the gameplay. In certain embodiments, if the player is still getting used to this new fully controlled camera system or is otherwise not adjusting quickly, the system may utilize one or more interpolations between the old and new control schemes during the camera cut, providing a seamless experience.

Moreover, the change in control schemes can adapt contextually to different actions and scenarios. For example, in a combat situation, the system can ensure that attacking, dodging, and other maneuvers can remain intuitive or otherwise unchanged despite the camera shift. For example, if the first control scheme involved pressing a button to attack an enemy in front, the second control scheme may adjust this input so that the attack remains directed at the intended target, even if the camera angle changes dramatically.

This adaptive control mechanism can extend to context-sensitive actions as well. Interactions such as picking up items, opening doors, or engaging in dialogue are recalibrated to match the new camera orientation. In some embodiments, the fully controlled camera system may ensure that these actions are still performed intuitively, maintaining consistency and immersion within the game.

Although a specific embodiment for a conceptual illustration of automatic relative movement control changes suitable for carrying out the various steps, processes, methods, and operations described herein is discussed with respect to FIG. 5, any of a variety of systems and/or processes may be utilized in accordance with embodiments of the disclosure. For example, as described below, there may be delays or other verifications done prior to switching the player from the first control scheme to a second controls scheme. The elements depicted in FIG. 5 may also be interchangeable with other elements of FIGS. 1-4 and 6-17 as required to realize a particularly desired embodiment.

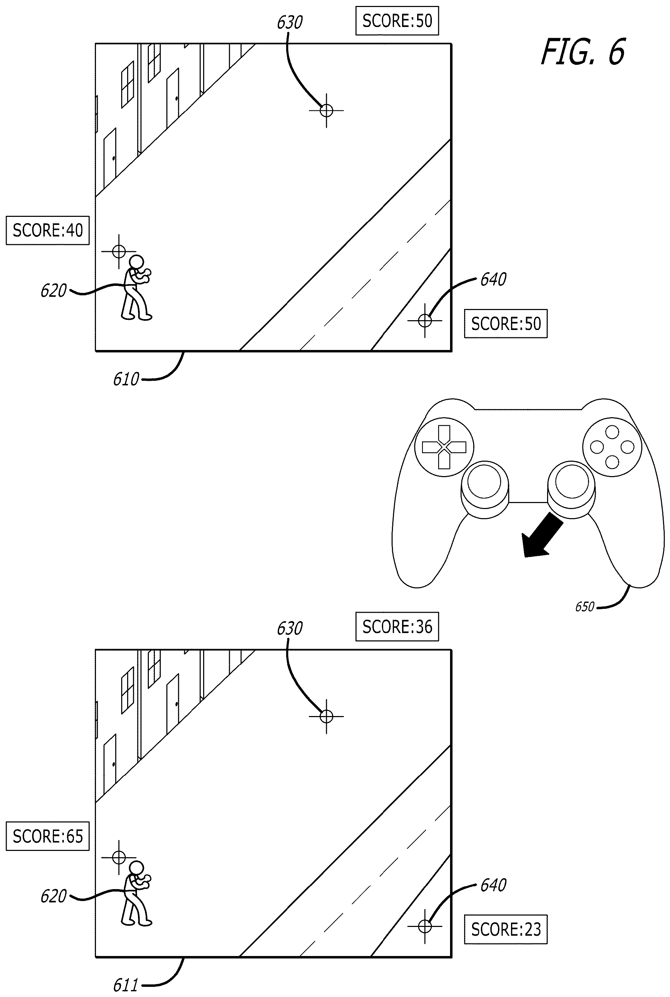

Referring to FIG. 6, a conceptual illustration of utilizing player hints in camera selection weighting in accordance with various embodiments of the disclosure is shown. The embodiment depicted shows a first frame 610 that has a plurality of camera points 630, 640 within the scene. A first camera point is relative to the player, such as an "over-the-shoulder" camera point. The second camera point 630 is at the other end of the frame 610, while the third camera point 640 is across the street. Each camera point in the first frame 610 has an associated score, with the second camera point 630 and third camera point 640 currently leading with a fifty score.

However, the player may utilize a control input, such as the right control stick on a controller 650 to generate a "hint" or otherwise indicate where they would like to look. Specifically in the embodiment shown in FIG. 6, the player is moving the right control stick toward the bottom left. This may or may not correspond to the over-the-shoulder camera point associated with the player 620. In some embodiments this stick movement could indicate the direction of interest, so the game would pick a camera that looks that direction, while in additional embodiments it might pick a camera that is simply in that direction. As a result, and in the example above, the camera score of any camera points closer to the indication can be rated higher, either through a generated weight, or other scaling. Specifically, the second frame 611 after the hint is provided by the player, the over-the-shoulder camera point, which now has a winning score of 65, while the second camera point 630 has a lowered score of thirty-six and the third camera point 640 has a reduced score of twenty-three. Subsequently, the fully controlled camera system can generate cuts as normal, with more chances of a cut going to where the player was indicating.

As described above, scoring camera points based on player hints can be highly beneficial to gameplay as it creates a more personalized and immersive experience by aligning the camera perspective with the player's focus and interests. By integrating player hints, such as, but not limited to, slight adjustments of the control stick towards areas of interest or frequently observed points in the environment, the system can dynamically prioritize and adjust camera angles to highlight these elements. This responsiveness not only enhances the player's engagement by showcasing what they find intriguing or important but also helps in maintaining continuity and reducing disorientation during gameplay. As a result, the game feels more intuitive and player-centric, fostering a deeper connection between the player and the game world.

Although a specific embodiment for a conceptual illustration of utilizing player hints in camera selection weighting suitable for carrying out the various steps, processes, methods, and operations described herein is discussed with respect to FIG. 6, any of a variety of systems and/or processes may be utilized in accordance with embodiments of the disclosure. For example, the hints may be verified (e.g., asking the player to validate the hint, etc.) prior to being utilized in the camera scoring process. The elements depicted in FIG. 6 may also be interchangeable with other elements of FIGS. 1-5 and 7-17 as required to realize a particularly desired embodiment.

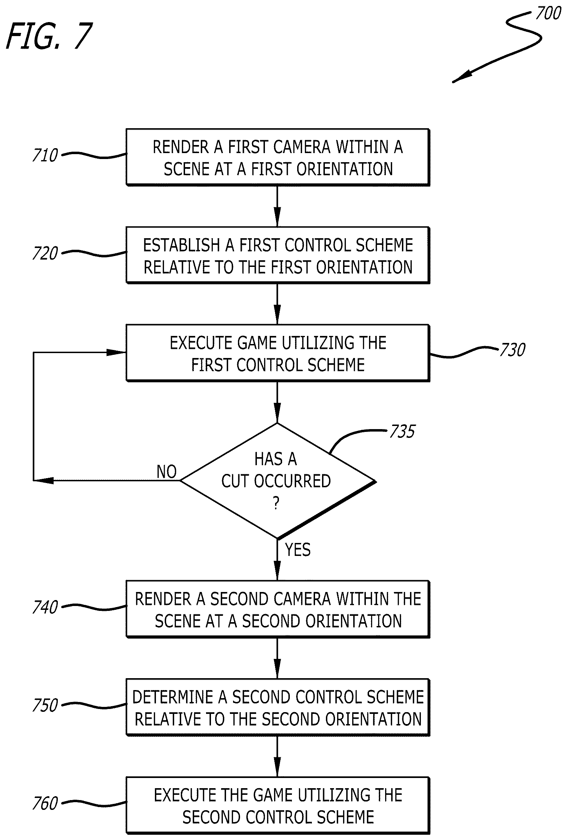

Referring to FIG. 7, a flowchart of a process 700 for utilizing relative control schemes in accordance with various embodiments of the disclosure is shown. In many embodiments, the process 700 can render a first camera within a scene at a first orientation (block 710). In various embodiments, rendering a first camera within a scene at a first orientation can involve initially selecting a camera point based on pre-defined cinematic rules and real-time game data. From a technical perspective, rendering a scene in a game with a camera can involve utilizing the game engine to process the scene's 3D geometry, transforming it into a 2D image from the camera's viewpoint. In various embodiments, this can start by taking the various camera parameters and characteristics into account such as, but not limited to, the camera's position and orientation, field of view, focal length, depth of field, and the like. The game engine may then calculate the visible objects within the camera's frustum (the visible area), applying transformations to project the 3D coordinates of these objects onto a 2D plane. Next, the game engine can apply lighting and shading models, textures and map materials onto the surfaces of objects. Often, rasterization, and post-processing effects may be applied to refine the scene.

In a number of embodiments, the process 700 can establish a first control scheme relative to the first orientation (block 720). In some embodiments, this can involve mapping player inputs from a controller or other input device onto specific in-game actions. More specifically, this can include defining the control layout, where each button, joystick, or trigger on an input device is assigned a particular function, such as movement, attack, jump, interact, etc. For instance, moving the left joystick may control the player's movement direction, while pressing a button might trigger an attack or an action specific to the context of the scene. The game engine is often configured to interpret these inputs in real-time, translating them into corresponding actions on the screen.

In more embodiments, the process 700 can execute the game utilizing the first control scheme (block 730). Executing the game using the established control scheme can involve allowing the player to utilize the controller to navigate and interact with the game world. This execution can continue as needed until an event occurs such as, but not limited to, a level ending, a cutscene, or a cut within the camera system.

In further embodiments, the process 700 can determine if a cut point has occurred (block 735). Various events and scenarios can lead to a "cut point," where the process 700 can be configured to automatically transition to a different location or angle to enhance the player's experience or transition to a new scene/environment/cutscene, etc. For example, when the player enters a new area or gaming environment, a cut point may occur to provide an optimal overview of the new surroundings, helping the player orient themselves quickly. Significant gameplay moments, such as boss fights, major plot reveals, or important character interactions, might trigger camera cuts to emphasize the event's significance and enhance the narrative impact. During fast-paced action scenes like combat or chase sequences, frequent camera cuts can maintain a dynamic and engaging perspective, ensuring the player has a clear view of the action and any threats.

If a cut has not occurred, then the process 700 can in various embodiments keep executing the game utilizing the first control scheme (block 730). However, if it is determined that a cut has occurred, then additional embodiments of the process 700 can render a second camera within the scene at a second orientation (block 740). In various embodiments, rendering a second camera at a different orientation in a scene can involve several technical steps to ensure a seamless transition and optimal visual output. Upon selection of a second camera point to render a second camera from, the game engine can subsequently recalculate the visible objects within this camera's frustum, updating the 3D geometry and transforming it into a 2D image from the new viewpoint. Other steps, such as lighting, model shading, and texture mapping may also occur accordingly. Rasterization and applying post-processing effects like anti-aliasing and motion blur can also occur to refine the visual output. The transition to this second camera is managed smoothly, often using techniques like cross-fades or match cuts, to maintain continuity and immersion, ensuring that the new camera orientation enhances the player's experience without disrupting gameplay.

In still more embodiments, the process 700 can determine a second control scheme relative to the second orientation (block 750). Determining a second control scheme relative to the second orientation can involve recalibrating player inputs to ensure seamless interaction from the new camera angle. When the camera shifts to the second orientation, the game engine may dynamically adjust the control mapping to maintain intuitive and responsive gameplay. For instance, movement inputs can be recalibrated so that pushing the joystick forward still moves the character in the perceived forward direction from the player's perspective, regardless of the new camera angle. Similarly, directional inputs for actions like aiming or dodging can be reoriented to align with the new view, ensuring that the player's commands correspond accurately to on-screen movements.

In yet further embodiments, the process 700 can execute the game utilizing the second control scheme (block 760). Similar to the discussion above, executing the game using the second control scheme can involve allowing the player to utilize the controller to navigate and interact with the game world relative to the new camera orientation. This execution can continue as needed until another event occurs. In this way, the player can continue to play within a fully controlled camera system, even when cuts are applied to the scene automatically.

Although a specific embodiment for a flowchart of a process 700 for utilizing relative control schemes suitable for carrying out the various steps, processes, methods, and operations described herein is discussed with respect to FIG. 7, any of a variety of systems and/or processes may be utilized in accordance with embodiments of the disclosure. For example, the control scheme may only map certain orientation-based aspects to the various control schemes affected by a change in camera view or other perspective. The elements depicted in FIG. 7 may also be interchangeable with other elements of FIGS. 1-6 and 8-17 as required to realize a particularly desired embodiment.

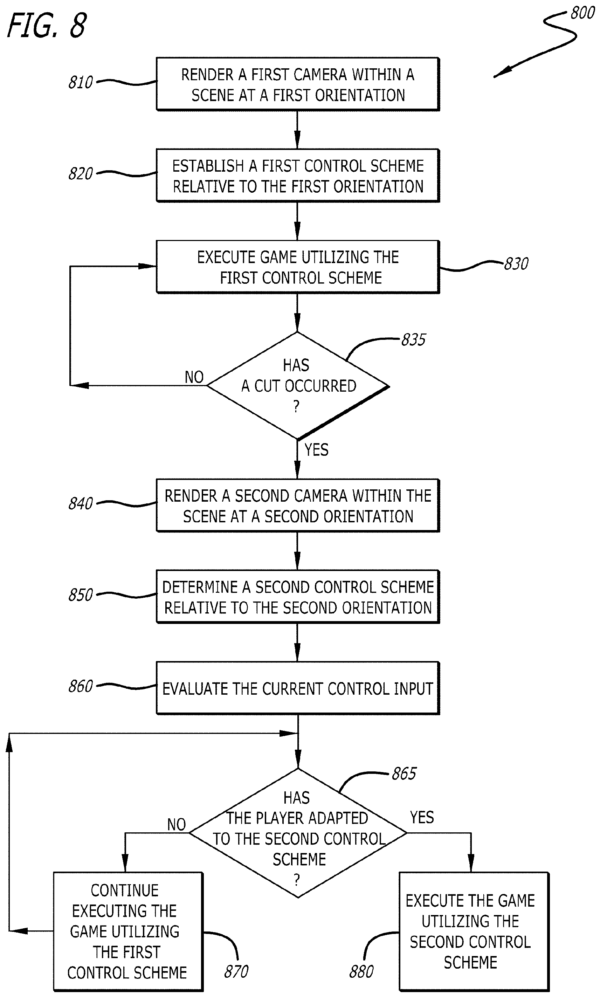

Referring to FIG. 8, a flowchart of a process 800 for adapting a relative control scheme to a player in accordance with various embodiments of the disclosure is shown. In some embodiments, the player may not adapt to a camera cut and change in orientation quickly. For example, during a fight scene, the player may not instantly change pushing the control stick in the correct direction toward the enemy upon a cut. In these instances, various embodiments of the process 800 may wait until the player changes input orientation to apply a secondary control scheme. In many embodiments, the process 800 can render a first camera within a scene at a first orientation (block 810). Similar to above, various embodiments can render a first camera within a scene at a first orientation by selecting a camera point based on pre-defined cinematic rules and real-time game data. From a technical perspective, rendering a scene in a game with a camera can involve utilizing the game engine to process the scene's 3D geometry, transforming it into a 2D image from the camera's viewpoint. In various embodiments, this can start by taking the various camera parameters and characteristics into account such as, but not limited to, the camera's position and orientation, field of view, focal length, depth of field, and the like. The game engine may then calculate the visible objects within the camera's frustum (the visible area), applying transformations to project the 3D coordinates of these objects onto a 2D plane. Next, the game engine can apply processing and post-processing as needed.

In a number of embodiments, the process 800 can establish a first control scheme relative to the first orientation (block 820). In some embodiments, this can involve mapping player inputs from a controller or other input device onto specific in-game actions. More specifically, this can include defining the control layout, where each button, joystick, or trigger on an input device is assigned a particular function, such as movement, attack, jump, interact, etc. For instance, moving the left joystick may control the player's movement direction, while pressing a button might trigger an attack or an action specific to the context of the scene. The game engine is often configured to interpret these inputs in real-time, translating them into corresponding actions on the screen.

In more embodiments, the process 800 can execute the game utilizing the first control scheme (block 830). Executing the game using the established control scheme can involve allowing the player to utilize the controller to navigate and interact with the game world. This execution can continue as needed until an event occurs such as, but not limited to, a level ending, a cutscene, or a cut within the camera system.

In further embodiments, the process 800 can determine if a cut has occurred (block 835). Various events and scenarios can lead to a "cut point," where the process 800 can be configured to automatically transition to a different location or angle to enhance the player's experience or transition to a new scene/environment/cutscene, etc. For example, when the player enters a new area or gaming environment, a cut point may occur to provide an optimal overview of the new surroundings, helping the player orient themselves quickly. Significant gameplay moments, such as boss fights, major plot reveals, or important character interactions, might trigger camera cuts to emphasize the event's significance and enhance the narrative impact. During fast-paced action scenes like combat or chase sequences, frequent camera cuts can maintain a dynamic and engaging perspective, ensuring the player has a clear view of the action and any threats.

If a cut has not occurred, then the process 800 can in various embodiments keep executing the game utilizing the first control scheme (block 830). However, if it is determined that a cut has occurred, then additional embodiments of the process 800 can render a second camera within the scene at a second orientation (block 840). In various embodiments, rendering a second camera at a different orientation in a scene can involve several technical steps to ensure a seamless transition and optimal visual output. Upon selection of a second camera point to render a second camera from, the game engine can subsequently recalculate the visible objects within this camera's frustum, updating the 3D geometry and transforming it into a 2D image from the new viewpoint. Other steps, such as lighting, model shading, and texture mapping may also occur accordingly. Rasterization and applying post-processing effects like anti-aliasing and motion blur can also occur to refine the visual output. The transition to this second camera is managed smoothly, often using techniques like cross-fades or match cuts, to maintain continuity and immersion, ensuring that the new camera orientation enhances the player's experience without disrupting gameplay.

In still more embodiments, the process 800 can determine a second control scheme relative to the second orientation (block 850). Determining a second control scheme relative to the second orientation can involve recalibrating player inputs to ensure seamless interaction from the new camera angle. When the camera shifts to the second orientation, the game engine may dynamically adjust the control mapping to maintain intuitive and responsive gameplay. For instance, movement inputs can be recalibrated so that pushing the joystick forward still moves the character in the perceived forward direction from the player's perspective, regardless of the new camera angle. Similarly, directional inputs for actions like aiming or dodging can be reoriented to align with the new view, ensuring that the player's commands correspond accurately to on-screen movements.

In yet further embodiments, the process 800 can evaluate the current control input (block 860). The evaluation can be done by polling or reading the input data coming in from one or more input devices, such as but not limited to, a player controller. For example, each button press can be passed to the process 800 for evaluation.

In still additional embodiments, the process 800 can determine if the player has adapted to the second control scheme (block 865). As previously discussed, a player may not instantly change their relative movement when a camera changes. In order to facilitate a smoother gameplay experience, the process 800 may compare the current input values against the updated second control scheme values. For example, if a player continues to press a control stick in the same direction that they were doing before the cut, even after the cut is made, the process 800 may interpret that as the player not adapting to the change in relative control schemes.

If it is determined that the player has not adapted to the second control scheme, various embodiments of the process 800 can continue executing the game utilizing the first control scheme (block 870). In certain embodiments, the process 800 may desire to provide a seamless gameplay experience to the player, even if they have not immediately adjusted to a new, second control scheme. In these instances, the process 800 can still apply the input movements from the first control scheme to the new orientation, such that a translation is done automatically between control schemes. In this way, the player may not be penalized for not instantly changing with the cut in action of the fully controlled camera system.

However, if it is determined that the player has adapted to the second control scheme, then certain embodiments of the process 800 can execute the game utilizing the second control scheme (block 880). At some point during gameplay after a cut, the player can realize that the relative orientation has changed and that a new set of inputs should be used to yield the same desired results from the first control scheme. For example, the player may start to change the direction of movement from a direction that was valid under the first control scheme to a new direction that yields the same result under the second control scheme. Upon detecting that this change has occurred in player input, various embodiments of the process 800 can adjust or otherwise apply the second control scheme. In additional embodiments, the process 800 may simply stop translating the inputs from the first control scheme to the second control scheme.

Although a specific embodiment for a flowchart of a process 800 for adapting a relative control scheme to a player suitable for carrying out the various steps, processes, methods, and operations described herein is discussed with respect to FIG. 8, any of a variety of systems and/or processes may be utilized in accordance with embodiments of the disclosure. For example, in some embodiments, the process 800 may use contextual clues to force a player to change control schemes. In these instances, less action may be occurring such that a slight change in outcomes in the second control scheme does not negatively affect the player sufficiently. Thus, the player can be quickly given a feedback or indication that the control scheme has changed. The elements depicted in FIG. 8 may also be interchangeable with other elements of FIGS. 1-7 and 9-17 as required to realize a particularly desired embodiment.

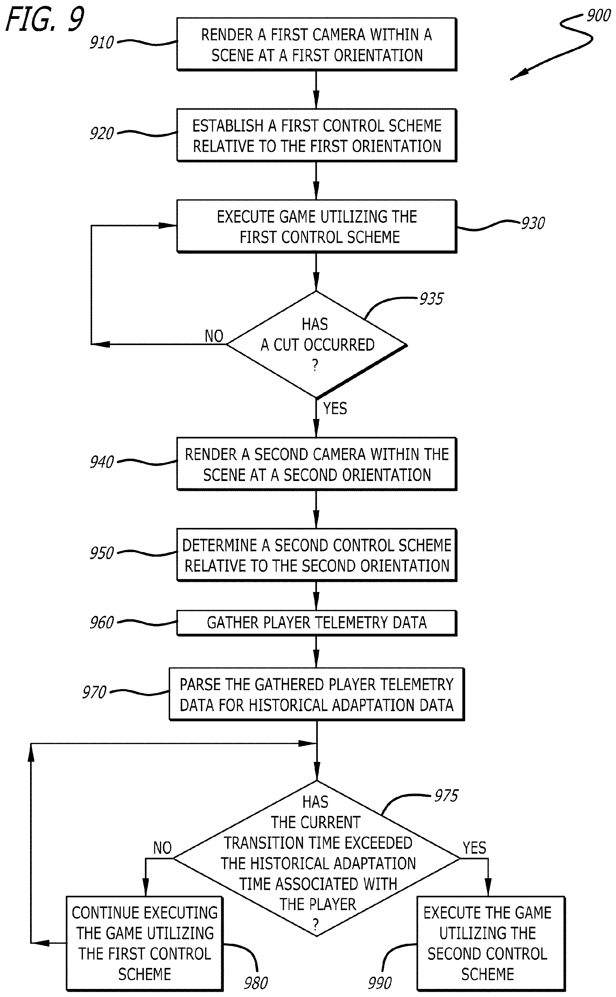

Referring to FIG. 9, a flowchart of a process 900 for utilizing telemetry data in a relative control scheme in accordance with various embodiments of the disclosure is shown. While some embodiments may monitor player inputs to determine changes in control schemes, additional embodiments may utilize past player data, such as telemetry data that can indicate when a good time to change control schemes may occur. In many embodiments, the process 900 can render a first camera within a scene at a first orientation (block 910). In various embodiments, rendering a first camera within a scene at a first orientation can involve initially selecting a camera point based on pre-defined cinematic rules and real-time game data. From a technical perspective, rendering a scene in a game with a camera can involve utilizing the game engine to process the scene's 3D geometry, transforming it into a 2D image from the camera's viewpoint.

In various embodiments, this can start by taking the various camera parameters and characteristics into account such as, but not limited to, the camera's position and orientation, field of view, focal length, depth of field, and the like. The game engine may then calculate the visible objects within the camera's frustum (the visible area), applying transformations to project the 3D coordinates of these objects onto a 2D plane. Next, the game engine can apply lighting and shading models, textures and map materials onto the surfaces of objects. Often, rasterization, and post-processing effects may be applied to refine the scene.

In a number of embodiments, the process 900 can establish a first control scheme relative to the first orientation (block 920). In some embodiments, this can involve mapping player inputs from a controller or other input device onto specific in-game actions. More specifically, this can include defining the control layout, where each button, joystick, or trigger on an input device is assigned a particular function, such as movement, attack, jump, interact, etc. For instance, moving the left joystick may control the player's movement direction, while pressing a button might trigger an attack or an action specific to the context of the scene. The game engine is often configured to interpret these inputs in real-time, translating them into corresponding actions on the screen.

In more embodiments, the process 900 can execute the game utilizing the first control scheme (block 930). Executing the game using the established control scheme can involve allowing the player to utilize the controller to navigate and interact with the game world. This execution can continue as needed until an event occurs such as, but not limited to, a level ending, a cutscene, or a cut within the camera system.

In further embodiments, the process 900 can determine if a cut has occurred (block 935). Various events and scenarios can lead to a "cut point," where the process 900 can be configured to automatically transition to a different location or angle to enhance the player's experience or transition to a new scene/environment/cutscene, etc. For example, when the player enters a new area or gaming environment, a cut point may occur to provide an optimal overview of the new surroundings, helping the player orient themselves quickly. Significant gameplay moments, such as boss fights, major plot reveals, or important character interactions, might trigger camera cuts to emphasize the event's significance and enhance the narrative impact. During fast-paced action scenes like combat or chase sequences, frequent camera cuts can maintain a dynamic and engaging perspective, ensuring the player has a clear view of the action and any threats.

If a cut has not occurred, then the process 900 can in various embodiments keep executing the game utilizing the first control scheme (block 930). However, if it is determined that a cut has occurred, then additional embodiments of the process 900 can render a second camera within the scene at a second orientation (block 940). In various embodiments, rendering a second camera at a different orientation in a scene can involve several technical steps to ensure a seamless transition and optimal visual output. Upon selection of a second camera point to render a second camera from, the game engine can subsequently recalculate the visible objects within this camera's frustum, updating the 3D geometry and transforming it into a 2D image from the new viewpoint. Other steps, such as lighting, model shading, and texture mapping may also occur accordingly. Rasterization and applying post-processing effects like anti-aliasing and motion blur can also occur to refine the visual output. The transition to this second camera is managed smoothly, often using techniques like cross-fades or match cuts, to maintain continuity and immersion, ensuring that the new camera orientation enhances the player's experience without disrupting gameplay.

In still more embodiments, the process 900 can determine a second control scheme relative to the second orientation (block 950). Determining a second control scheme relative to the second orientation can involve recalibrating player inputs to ensure seamless interaction from the new camera angle. When the camera shifts to the second orientation, the game engine may dynamically adjust the control mapping to maintain intuitive and responsive gameplay. For instance, movement inputs can be recalibrated so that pushing the joystick forward still moves the character in the perceived forward direction from the player's perspective, regardless of the new camera angle. Similarly, directional inputs for actions like aiming or dodging can be reoriented to align with the new view, ensuring that the player's commands correspond accurately to on-screen movements.

In yet further embodiments, the process 900 can gather player telemetry data (block 960). As games are released and played by various players, telemetry data may be generated that gathers and otherwise indicates data related to various playthroughs done by players. In this way, the telemetry data can be used to update the game as desired by the game designers. For example, the telemetry data may indicate that players largely take a certain amount of time when changing from one type of cut to another. Utilizing this telemetry data, specific lag timings can be deployed such that more players are able to more seamlessly play the game through the fully controlled camera system. In some embodiments, the telemetry data may be aggregated to generate a consensus or generalized value. However, in certain embodiments, the telemetry data may be configured for each individual player.

In still additional embodiments, the process 900 can parse the gathered player telemetry data for historical adaptation data (block 970). Telemetry data may be comprised of a number of different types of data that all relate to how a player has played through a game. In some embodiments, the telemetry data may comprise historical adaptation data that can be associated with, for example, how long a player typically takes to adjust from a first control scheme to a second control scheme after a fully automated cut within a scene. In various embodiments, this may include granular details such as, but not limited to, the historical transition times from one type of cut or camera point to another, or even from one specific camera point to another specific camera point.

In a variety of embodiments, the process 900 can determine if the current transition time has exceeded the historical adaptation time associated with the player (block 975). Based on the parsed historical adaptation time, the process 900 may, in certain embodiments, simply not attempt a transition from the first control scheme to the second control scheme until that time amount has passed. The historical transition time may be a value specific to that player, or may be a general or average value derived from an aggregated source of telemetry data.

If it is determined that the current transition time has not exceeded the historical adaptation time, then certain embodiments of the process 900 can continue executing the game utilizing the first control scheme (block 980). As described above, certain embodiments of the process 900 may desire to provide a seamless gameplay experience to the player, even if they have not immediately adjusted to a new, second control scheme. In these instances, the process 900 can still apply the input movements from the first control scheme to the new orientation, such that a translation is done automatically between control schemes. In this way, the player may not be penalized for not instantly changing with the cut in action of the fully controlled camera system.

However, if it is determined that the current transition time has exceeded the historical transition time, then some embodiments of the process 900 can execute the game utilizing the second control scheme (block 990). As the historical adaptation time expires, it can be assumed by the process 900 that the player has or will shortly adjust to the relative orientation change and that a new set of inputs should be used to yield the same desired results from the first control scheme. Upon detecting that the historical adaptation time has elapsed, various embodiments of the process 900 can adjust or otherwise apply the second control scheme. In additional embodiments, the process 900 may simply stop translating the inputs from the first control scheme to the second control scheme.

Although a specific embodiment for a flowchart of a process 900 for utilizing telemetry data in a relative control scheme suitable for carrying out the various steps, processes, methods, and operations described herein is discussed with respect to FIG. 9, any of a variety of systems and/or processes may be utilized in accordance with embodiments of the disclosure. For example, in some embodiments, the process 900 may attempt to decrease the historical transition time value such that a player may be "trained" to respond faster in the future. The elements depicted in FIG. 9 may also be interchangeable with other elements of FIGS. 1-8 and 10-17 as required to realize a particularly desired embodiment.

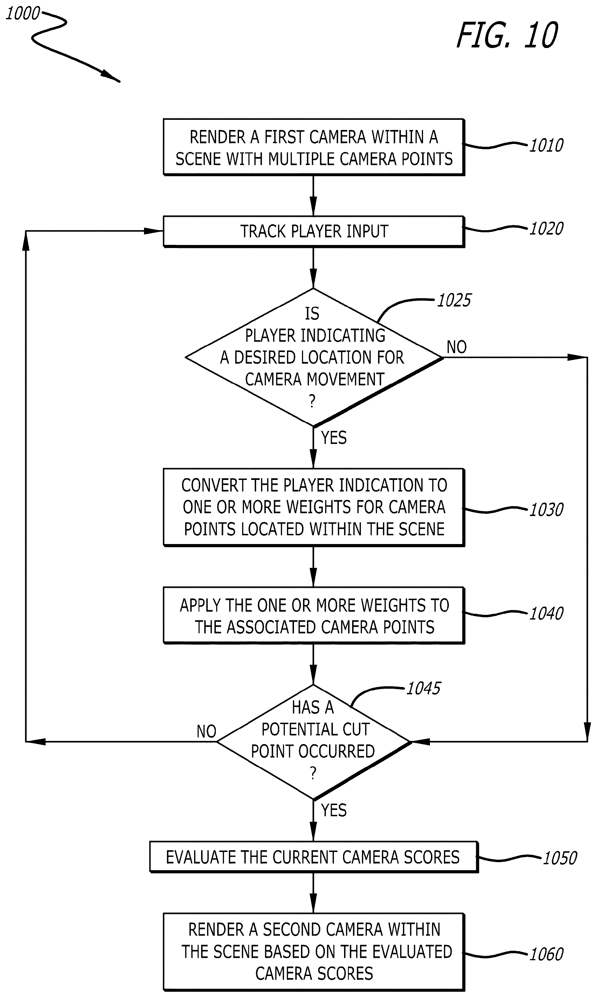

Referring to FIG. 10, a flowchart of a process 1000 for utilizing player hints for camera score weighting in accordance with various embodiments of the disclosure is shown. Even in a fully controlled camera system, there may be instances where a player may want a change in the camera, such as to look in a specific area or at some item in the environment they believe is important. As such, a method of providing hints from the player may be utilized to color the scoring of different camera points such that cuts to camera points associated with the intent of the player can occur.

In many embodiments, the process 1000 can render a first camera within a scene with multiple camera points (block 1010). As previously discussed, each scene in an environment may have multiple locations where a camera can be placed, or camera points. The number of available camera points can vary based on the environment and other factors such as obstacles, players, enemies, and the like. Each camera point may be cut to by the fully controlled camera system in response to various factors such as, but not limited to, a change in score or one or more cut point events.

In a number of embodiments, the process 1000 can track player input (block 1020). This tracking can be done by polling or reading the input data coming in from one or more input devices, such as but not limited to, a player controller. For example, each button press can be passed to the process 1000 for evaluation.

In more embodiments, the process 1000 can determine if the player is indicating a desired location for camera movement (block 1025). As those skilled in the art will recognize, various methods can be used to track a player's desire and indications. For example, a controller may have a secondary control stick that can be utilized by the player to indicate where they would like to look. In additional embodiments, the indications can be derived from monitoring the player activity, such as continued movement towards and area or over an item, or when a group of players are all standing in the same location in the environment. Other methods are contemplated, and the examples given here are illustrative in nature and not meant to be comprehensive.

If it is determined that no player indication is being received, then various embodiments of the process 1000 can further determine if a potential cut has occurred (block 1045). Various events and scenarios can lead to a "cut point," where the process 1000 can be configured to automatically transition to a different location or angle to enhance the player's experience or transition to a new scene/environment/cutscene, etc. For example, when the player provides a hint, enters a new area or gaming environment, a cut point may occur to provide an optimal overview of the new surroundings, helping the player orient themselves quickly.

However, if it is determined that the player is indicating a desired location for camera movement, then certain embodiments of the process 1000 can convert the player indication to one or more weights for camera points located within the scene (block 1030). As described above, the hints or indications provided by the player(s) can be converted into one or more weights or a scale conversion for a final camera score. The specific conversion or value derived can vary based on a variety of factors including, but not limited to, the type of camera being indicated toward, the specific game environment, the current game state, etc. For example, hints may not affect camera score as much during action scenes compared to non-action scenes.

In further embodiments, the process 1000 can apply the one or more weights to the associated camera points (block 1040). Applying these weights or other scales/offsets to the camera scores can be done after a non-hint camera score is generated. However, in certain embodiments, the adjustments may be "baked in" and affect the camera score generation process such that the final score is affected, and the fully controlled camera system is allowed to otherwise process cuts as usual.

Again, in some embodiments, the process 1000 can determine if potential cut point has occurred (block 1045). If it is determined that no potential cut point has occurred, some embodiments of the process 1000 can continue to track player input (block 1020). However, if it is determined that a potential cut point has occurred or will occur in the near future, a variety of embodiments of the process 1000 can evaluated the current camera scores (block 1050). This step in the process 1000 can occur normally in various embodiments.

In still more embodiments, the process 1000 can render a second camera within the scene based on the evaluated camera scores (block 1060). In various embodiments, rendering a second camera at a different orientation in a scene can involve several technical steps to ensure a seamless transition and optimal visual output. Upon selection of a second camera point to render a second camera from, the game engine can subsequently recalculate the visible objects within this camera's frustum, updating the 3D geometry and transforming it into a 2D image from the new viewpoint. Other steps, such as lighting, model shading, and texture mapping may also occur accordingly. Rasterization and applying post-processing effects like anti-aliasing and motion blur can also occur to refine the visual output. The transition to this second camera is managed smoothly, often using techniques like cross-fades or match cuts, to maintain continuity and immersion, ensuring that the new camera orientation enhances the player's experience without disrupting gameplay, while allowing the player to have a better change to influence the camera selection and allow them to "see" what they were previously hinting at.

Although a specific embodiment for a flowchart of a process 1000 for utilizing player hints for camera score weighting suitable for carrying out the various steps, processes, methods, and operations described herein is discussed with respect to FIG. 10, any of a variety of systems and/or processes may be utilized in accordance with embodiments of the disclosure. For example, the hints may be scored or scaled based on telemetry data. In these embodiments, a player that indicates a hint for one area or item that has also been indicated by other players in the telemetry data may yield a bigger scaled score or weight within the fully controlled camera system and corresponding camera score process. Conversely, indications made by a player that have not been done by other players in the telemetry data can yield a lower effect within the camera score system. The elements depicted in FIG. 10 may also be interchangeable with other elements of FIGS. 1-9 and 11-17 as required to realize a particularly desired embodiment.

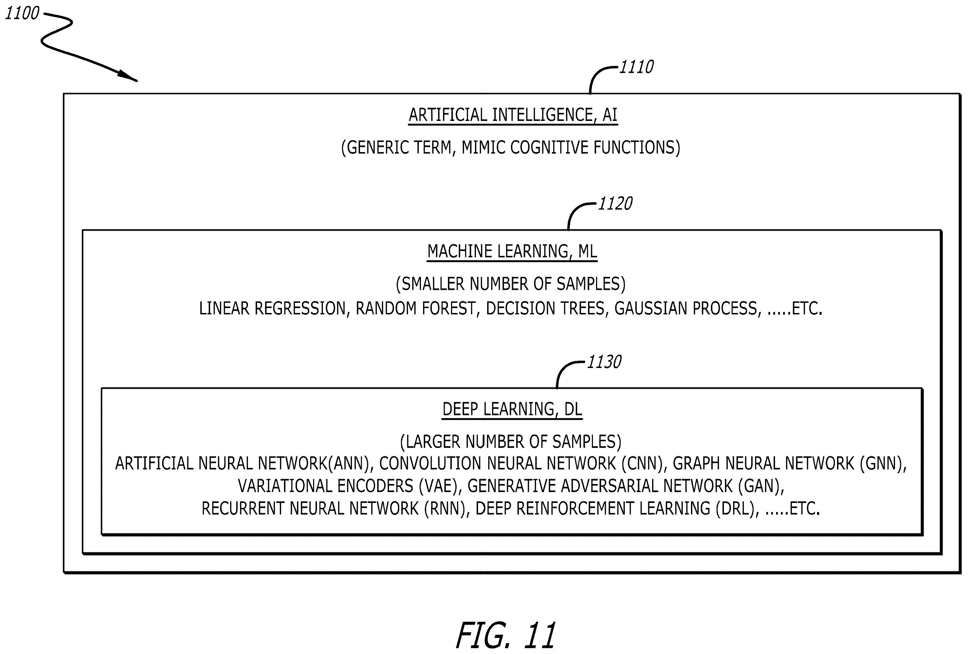

Referring to FIG. 11, a diagram 1100 depicting various subsets of artificial intelligence in accordance with various embodiments of the disclosure is shown. Artificial intelligence (AI) 1110 is typically understood in the art to be the development of machines and algorithms that mimic human intelligence, for example, by optimizing actions to achieve certain goals. At its core, AI 1110 often involves designing algorithms and models that mimic cognitive functions, such as learning, reasoning, problem-solving, perception, and even language understanding. Unlike traditional computer programs that follow a fixed set of instructions, AI systems have the ability to adapt, improve, and make decisions based on input data and environmental interactions.

AI 1110 can be considered a generic term because it encompasses a wide range of subfields and techniques, from simple rule-based systems to advanced machine learning and deep learning models. These AI techniques are used to simulate various aspects of human cognition. For example, machine learning (ML) 1120 allows computers to learn from data patterns without explicit programming for each task, while natural language processing (NLP) enables machines to understand and generate human language. Deep learning (DL) 1130, a more advanced branch of AI, uses neural networks to automatically learn complex patterns from large datasets, akin to the human brain's information processing. This versatility makes AI a powerful tool across diverse applications, including image recognition, autonomous driving, voice assistants, healthcare diagnostics, and materials discovery.

A goal of AI is often to create systems that can function autonomously and intelligently in real-world scenarios. As AI 1110 continues to evolve, it can increasingly mirror human-like cognition, enabling machines to not just process data but to "think" in a way that can handle uncertainty, make predictions, and even interact with their surroundings in a meaningful manner. While AI systems are far from achieving the full breadth of human intelligence, their ability to replicate specific cognitive functions makes them invaluable in tackling complex, data-driven challenges.

Machine Learning (ML) 1120 is a subset of Artificial Intelligence (AI) 1110 that focuses on the development of algorithms and statistical models that enable computers to learn and make decisions from data without explicit programming. In traditional programming, a computer is given a fixed set of rules to follow, but ML 1120 can shift this paradigm by allowing systems to identify patterns, adapt, and improve their performance based on the data they encounter. This data-driven approach makes ML particularly valuable for tasks that are too complex or dynamic to define using straightforward rules, such as, for example, recognizing images, predicting consumer behavior, or diagnosing diseases. In various embodiments described herein, machine-learning methods may be utilized to configure the current control scheme, direction, or other aspects about a fully controlled camera system with varying controls within an interactive game.

ML models can be configured to analyze large amounts of data to identify trends and relationships that inform their predictions or classifications. The process typically involves three stages: training, validation, and testing. During training, the model learns from a dataset by adjusting its internal parameters to minimize errors between its predictions and the actual results. Techniques like linear regression, decision trees, random forests, and Gaussian processes are commonly used in ML 1120. These algorithms can handle various data types, including numerical, categorical, and structured datasets like spreadsheets or grids. One of the key strengths of ML is its ability to generalize from the training data to make accurate predictions on new, unseen data. In a number of embodiments described herein, training data may be generated from current and historical player data, developer inputs, quality assurance/testing feedback, among other sources.

However, traditional ML methods rely heavily on feature engineering, wherein human experts manually identify the most relevant features or patterns within the data. For example, when using ML 1120 for image recognition, an expert might need to extract features like edges, textures, or color patterns before feeding them into a model. This requirement can limit the scalability of traditional ML approaches, especially when dealing with large, unstructured datasets such as images, text, or graphs. Additionally, ML algorithms may often work best when provided with relatively structured data, and they often need a reasonable amount of samples (typically more than 100) to learn effectively.

Deep Learning (DL) 1130 is a specialized subset of Machine Learning (ML) 1120 that employs multi-layered artificial neural networks to automatically learn complex patterns and representations from large, often unstructured datasets. Inspired by the way the human brain processes information, DL 1130 consists of interconnected layers of "neurons" that can adaptively change as they are exposed to more data. Unlike traditional ML methods, which require manual feature engineering to identify key data characteristics, DL models can automatically extract features directly from raw data, such as images, text, or molecular structures. This automated feature extraction allows DL 1130 to handle data types and tasks that were previously difficult or impossible for ML models to tackle effectively.

DL models, including Convolutional Neural Networks (CNNs), Graph Neural Networks (GNNs), and Recurrent Neural Networks (RNNs), excel at processing various forms of data. CNNs are particularly effective for image analysis, recognizing intricate patterns in visual inputs, making them indispensable in areas like materials science for analyzing microscopic images or detecting defects in materials. GNNs, on the other hand, are designed to work with graph-based data, such as molecular structures, social networks, or atomic interactions. They can learn the dependencies and relationships within graph-like structures, which is crucial for predicting properties of complex molecules and materials. RNNs and their variants, such as Long Short-Term Memory (LSTM) networks, are suited for sequential data like time series or natural language processing, allowing for the analysis and generation of textual information or the prediction of temporal patterns in scientific research.

One of the defining characteristics of deep learning is its requirement for large datasets (typically over 500 samples for example) to effectively train neural networks. The deep, multi-layered structure of these networks enables them to capture highly complex and abstract representations of the data, but it also demands significant computational power. Techniques like Variational Autoencoders (VAEs) and Generative Adversarial Networks (GANs) add to the versatility of DL by enabling the generation of new data samples that resemble the training set, aiding in areas such as materials discovery and synthetic data creation. Deep Reinforcement Learning (DRL) combines neural networks with decision-making processes to solve problems that involve optimization and control, further expanding DL's application potential. In summary, DL's ability to automatically learn from raw, unstructured data and model intricate patterns makes it a powerful tool in AI, particularly for complex domains like image recognition, natural language processing, and materials science.

Artificial Neural networks (ANNs or sometimes just NNs) are often a foundation of a DL system. The basic unit of a neural network is typically the perceptron, which can take inputs, assigns weights to these inputs, and combines them to produce an output. The final output is then passed through an activation function (such as, for example, ReLU, sigmoid, or hyperbolic tangent) to introduce non-linearity, which enables the network to model complex patterns.

Neural networks are typically trained through a process of backpropagation, where the system's predictions are compared against the known output, and a loss function is used to measure the difference between the prediction and the actual result. The network's weights can be adjusted through a process called gradient descent, which can be configured to minimize the loss function over time. However, the training process can be prone to problems like overfitting (where the model performs well on the training data but poorly on new data). To counter this, techniques such as regularization (e.g., regularization, dropout), early stopping, and mini-batches can be utilized to prevent the network from becoming overly specialized to the training set.

CNNs are a specific type of ML 1130 neural network designed to work particularly well with image data, making them highly relevant as image data can be generated within an interactive game and thus be subject to processing. As those skilled in the art will recognize, CNNs typically use specialized layers known as convolutional layers, which apply filters (also known as kernels) to the input data. These filters slide over the input (e.g., an image), detecting patterns like edges or textures, which are then passed to the next layer for further processing. The advantage of CNNs is their ability to automatically learn and extract relevant features from raw data without the need for manual feature engineering. Furthermore, pooling layers (e.g., max-pooling or average pooling) are often added after convolutional layers to reduce the dimensionality of the data, helping to make the system more efficient while retaining the most important information. After several layers of convolutions and pooling, the CNN can output a prediction, such as classifying an image or generating a score suitable for evaluation for a camera cut or change in control scheme.

While CNNs are well-suited for grid-based data like images, many real-world problems in can involve non-grid data, such as player/asset locations, control schemes, or player/asset interactions. This type of data may better be represented as a graph, where nodes represent entities (e.g., assets) and edges represent relationships between them (e.g., characteristics/player inputs/camera value). Thus, Graph Neural Networks (GNNs) can be utilized to operate on such graph-based data.

In GNNs, information is passed between nodes through edges in a process called message passing. This allows the network to capture dependencies and relationships within the graph structure. The key feature of GNNs is their ability to aggregate information from neighboring nodes, which is crucial in predicting properties that depend on the current/local structure, such as the behavior of an asset or the properties of a player control input.

Generative models aim to learn the underlying distribution of a dataset and generate new samples that resemble the original data. Two common types of generative models are Variational Autoencoders (VAEs) and Generative Adversarial Networks (GANs). VAEs are often configured to work by encoding data into a lower-dimensional latent space and then decoding it back into its original form. This allows for the generation of new data by sampling points from the latent space. This can be utilized when attempting to determine when to transition to a new control scheme or the like.

Similarly, GANs consist of two components: a generator that creates fake/generated data and a discriminator that tries to distinguish between real and fake data. The two components are trained in a competitive process where the generator tries to "fool" the discriminator, leading to increasingly realistic generated data. This type of process may be utilized to compare camera real vs. projected player inputs.

Reinforcement Learning (RL) involves an agent learning to make decisions by interacting with an environment and receiving feedback (rewards or penalties) based on its actions. Deep Reinforcement Learning (DRL) combines RL with DL techniques, allowing agents to learn from high-dimensional inputs, such as images or complex camera simulations.

In interactive games, DRL can be used in scenarios where an optimal decision needs to be made, such as optimizing a player control schemes or finding the best configuration for a camera movement based on the desired or current properties of the player input(s). The combination of RL and DL can allow for learning from raw data, making it a powerful tool for dynamic and real-time decision-making within an interactive game.

Although a specific embodiment for a diagram 1100 depicting various subsets of artificial intelligence suitable for carrying out the various steps, processes, methods, and operations described herein is discussed with respect to FIG. 11, any of a variety of systems and/or processes may be utilized in accordance with embodiments of the disclosure. For example, other subset may be present and available for use within AI 1110. Those skilled in the art will recognize that the diagram 1100 presented in FIG. 11 is simplified for illustration purposes and various methods and techniques may interact with other areas (ML 1120 with DL 1130, etc.). The elements depicted in FIG. 11 may also be interchangeable with other elements of FIGS. 1-10 and 12-17 as required to realize a particularly desired embodiment.

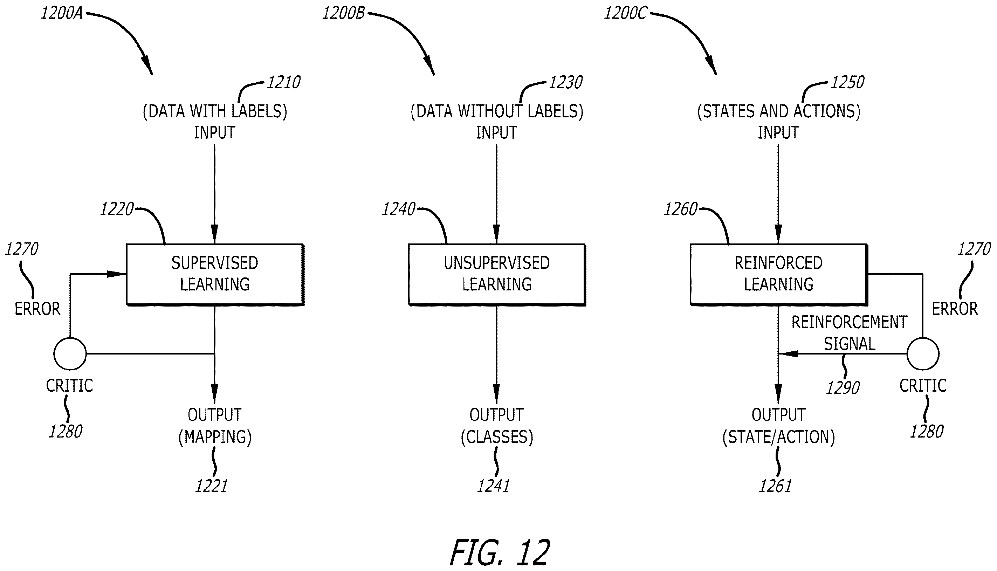

Referring to FIG. 12, different methods of machine-based learning in accordance with various embodiments of the disclosure are shown. In many embodiments, a machine learning model is defined as a mathematical representation of the output of the training process. A machine learning model is often considered similar to computer software designed to recognize patterns or behaviors based on previous experience or data. However, the learning algorithm can discover patterns within the training data, and output an ML model which can capture these patterns and make predictions on new data.

ML models can be understood as a device that has been trained to find patterns within new data and make predictions. These models can be represented as a complex mathematical function that would be impractical for a human to calculate that takes requests in the form of input data, makes predictions on input data, and then provides an output in response. First, these models can be trained over a set of data, and then they are provided an algorithm or other task to reason over data, extract the pattern from feed data and learn from that data. Once the model(s) is/are trained, they can be used to predict a new and previously unseen dataset.

There are various types of machine learning models available based on different business goals and data sets available. Often, based on the desired application, ML models can be configured as or settle into one of three different model types: supervised learning, unsupervised learning, and/or reinforcement learning. Supervised learning can further be broken down into two categories of classification and regression. Likewise, unsupervised learning can be divided into three categories: clustering, association rule, and/or dimensionality reduction.

In the embodiment depicted in FIG. 12, a supervised learning system 1200A is shown. The supervised learning system 1200A can be configured with a supervised learning model 1220 that accepts input data 1210 and generates an output 1221. However, the output data is often reviewed by a critic 1280 that can determine one or more errors 1270 that are fed back into the supervised learning model 1220 for use in updating.

Supervised learning systems 1200A are often considered the simplest machine learning model to understand in which input data (such as training data) has a known label or result as an output. So, the supervised learning model 1220 can be understood to work on the principle of input-output pairs. As such, a function can be trained using a training data set, which is then applied to unknown data and makes some predictive performance. Supervised learning is task-based and mostly tested on labeled data sets.

Supervised learning systems 1200A may often involve one or more regression problems. In regression problems, the output is a continuous variable. Some commonly used Regression models include linear regression, decision trees, and random forests. Linear regression is typically the most straight forward machine learning model in which a prediction of one output variable is made using one or more input variables. The representation of linear regression can be processed as a linear equation, which combines a set of input values (denoted as x) and a predicted output (denoted as y) for the set of those input values. As those skilled in the art will recognize, this may be represented in the form of a line: Y = bx+ c. A typical aim of a linear regression-based model can be to find the optimal fit line that best fits the available data points. Linear regression can be extended to multiple linear regressions (finding a plane of best fit in higher dimensional space) and polynomial regressions (finding the best fit curve).

Decision trees are also popular machine learning models that can be used for both regression and classification problems. A decision tree uses a tree-like structure of decisions along with their possible consequences and outcomes. In this, each internal node is used to represent a test on an attribute while each branch is used to represent the outcome of the test. The more nodes a decision tree has, the more accurate the result will be. This may be used when making decisions related to various control scheme options and the resulting transition between one or more schemes. The advantage of decision trees is that they are intuitive and easy to implement, but may lack accuracy depending on the available computational or time resources available.

Random forests are an ensemble learning method, which may consist of a large number of decision trees. For example, each decision tree in a random forest predicts an outcome, and the prediction with the majority of votes is considered as the outcome. A random forest model can be used for both regression and classification problems. For the classification task, the outcome of the random forest may be taken from the majority of votes. Whereas in the regression task, the outcome can be taken from the mean or average of the predictions generated by each tree.

Classification models are another type of supervised learning, which can be used to generate conclusions from observed values in one or more categorical forms. For example, a classification model can identify if an email is spam or not; whether a player has transitioned to a new control scheme, etc. Classification algorithms can also be used to predict between two or more classes and/or categorize an output into different groups. For these classification systems, a classifier model can be designed that classifies the dataset into different categories, and each category can subsequently be assigned a label. As those skilled in the art will recognize, there are currently two main types of classifications in machine learning: binary and multi-class. Binary classification can be utilized when there are only two possible classes (i.e., yes/no, dog/cat, etc.). Multi-class classification can be utilized when there are more than two possible classes, thus requiring a multi-class classifier.

One of the potential classification processes is logistic regression. Logistic regression can be used to solve various classification problems in machine learning systems. These processes are similar to linear regression but are often used to predict categorical variables. While some variations can be configured to generate a prediction as an output in either "yes" or "no", 0 or 1, "true" or "false", etc. However, in some embodiments, the system can instead be configured to not give exact values, but instead provide probabilistic values between zero and one, etc.

Another classification process that can be utilized is a support vector machine (SVM) which is widely used for classification and regression tasks. However, the main aim of SVM is to find the best decision boundaries in an N-dimensional space, which can be utilized to segregate data points into classes, and generate a best decision boundary often known as a hyperplane. SVM processes can select the extreme vector to find a hyperplane, wherein these vectors are known as support vectors.

Naïve Bayes is another popular classification algorithm used in machine learning. This process receives its name as it is based on Bayes theorem and follows the naïve(independent) assumption between the features which is often given as the formula: $P \left(\left.y\right|X\right) = \frac{P \left(\left.X\right|y\right) ∗ P \left(y\right)}{P \left(X\right)}$

This formula takes a class or target y and a predictor attribute (X) and calculates a posterior probability P(y|X) of that class given a particular predictor. P(y) is the prior probability of that class, P(X) is the prior probability of the predictor, and P(X|y) is the likelihood or probability of the predictor given the class. As those skilled in the art will recognize, this may be more succinctly understood as the posterior chance being a result of the prior results times the likelihood divided by the evidence available. Each naïve Bayes classifier assumes that the value of a specific variable is independent of any other variable/feature. For example, if a fruit needs to be classified based on color, shape, and taste. So yellow, oval, and sweet will be recognized as mango. Here each feature is independent of other features. Likewise, various embodiments herein can classify based on control schemes, camera direction, player inputs, etc.

Again, in the embodiment depicted in FIG. 12, an unsupervised learning system 1200B is shown. The unsupervised learning system 1200B can be configured with an unsupervised learning model 1240 that accepts input data 1230 and generates an output 1241. Unlike other model types, there are no critics or error signals to process. Unsupervised learning models 1240 can implement the learning process opposite to supervised learning, which means it enables the model to learn from an unlabeled training dataset. Based on the unlabeled dataset, the unsupervised learning model 1240 can predict the output. Using an unsupervised learning system 1200B, the unsupervised learning model 1240 can learn hidden patterns from the dataset by itself without any supervision. In various embodiments, unsupervised learning models 1240 are often utilized to perform tasks involving clustering, association rule learning, and/or dimensional reduction.

Clustering is an unsupervised learning technique that involves clustering or grouping the available data points into different clusters based on similarities and/or differences. The objects or data points with the most similarities remain in the same group, and they have no or very few similarities from other groups. Clustering algorithms can be used in a variety of different tasks such as, but not limited to image segmentation, statistical data analysis, market segmentation, and the like. Some commonly used clustering algorithms that can be selected include K-means Clustering, hierarchal Clustering, DBSCAN, etc.

Association rule learning is an unsupervised learning technique which finds unique relations among variables within a large data set. In many embodiments, a primary aim of this type of learning algorithm is to find the dependency of one data item on another data item and map those variables accordingly so that it can satisfy some desired outcome. For example, in certain embodiments, an association rule system may be utilized to transition a control scheme to minimize player corrections. This algorithm can be applied in market basket analysis, web usage mining, continuous production, etc. However, those skilled in the art will recognize that other scenarios may be available based on the desired application. Some popular algorithms of association rule learning are Apriori Algorithm, Eclat, and FP-growth algorithm.

In additional embodiments, the number of features/variables present in a dataset can be understood as the dimensionality of the dataset, and the technique used to reduce the dimensionality is known as a dimensionality reduction technique. Although more data provides more accurate results, it can also affect the performance of the model/algorithm, such as yielding overfitting outcomes, etc. In such cases, dimensionality reduction techniques can be utilized. It is often desired that this process involves converting the higher dimensions dataset into lesser dimensions dataset while also ensuring that the ensuing results provide similar information. Different dimensionality reduction methods can be utilized, such as, but not limited to, PCA (Principal Component Analysis), Singular Value Decomposition (SVD), etc.

Finally, in the embodiment depicted in FIG. 12, a reinforcement learning system 1200C is shown. The reinforcement learning system 1200C can be configured with a reinforcement learning model 1260 that accepts input data 1250 and generates an output 1261. In reinforcement learning, the reinforcement learning model 1260 learns actions for a given set of states that lead to a goal state. In the embodiment depicted in FIG. 12, a critic 1280 can receive or otherwise notice an error 1270 within the reinforcement learning model 1260 actions, and adjust the outcome/output such that the "reward" or "punishment" is adjusted to better model the future behaviors or processing of the reinforcement learning model 1260.

It is a feedback-based learning model that can takes feedback signals after each state or action by interacting with the environment. This feedback works as a reward (positive for each good action and negative for each bad action), and the agent's goal is to maximize the positive rewards to improve their performance. The behavior of the model in reinforcement learning is similar to human learning, as humans learn things by experiences as feedback and interact with the environment. Popular methods of reinforcement learning including q-learning, state-action-reward-state-action (SARSA), and deep Q network.

Q-learning is one of the popular model-free algorithms of reinforcement learning, which is based on the Bellman equation. It often aims to learn the policy that can help the AI agent to take the best action for maximizing the reward under a specific circumstance. It can incorporate Q values for each state-action pair that indicate the reward to following a given state path, and it tries to maximize that Q-value.

SARSA is an on-policy algorithm based on the Markov decision process. In many embodiments, it can use the action performed by the current policy to learn the Q-value. The SARSA algorithm stands for State Action Reward State Action, which symbolizes the tuple (s, a, r, s', a'). Finally, deep Q neural networking (or DQN) is Q-learning within a neural network. It can be deployed within a big state space environment where defining a Q-table would be a complex task. So, in these embodiments, rather than using a Q-table, the neural network instead utilizes Q-values for each action based on the state.

Although a specific embodiment for different methods of machine-based learning suitable for carrying out the various steps, processes, methods, and operations described herein is discussed with respect to FIG. 12, any of a variety of systems and/or processes may be utilized in accordance with embodiments of the disclosure. For example, those skilled in the art will recognize that methods of learning described herein are generalized and may incorporate other types developed as well as a combination of one or more methods based on the goals of the desired application. The elements depicted in FIG. 12 may also be interchangeable with other elements of FIGS. 1-11 and 13-17 as required to realize a particularly desired embodiment.

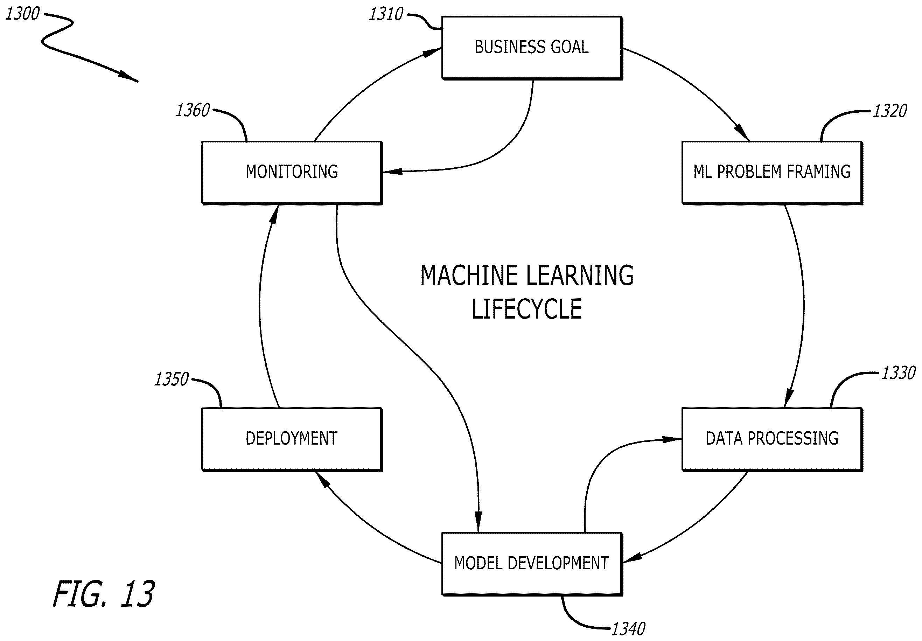

Referring to FIG. 13, a machine learning lifecycle 1300 in accordance with various embodiments of the disclosure is shown. During the development of machine learning systems, the embodiment depicted in FIG. 13 can provide a framework for how to structure the design and maintenance of these systems. This machine learning lifecycle 1300 outlines various stages involved in building, deploying, and improving ML models to solve real-world problems. By following this structured process, businesses and organizations can ensure that their machine learning projects align with strategic goals, use data effectively, and adapt to changing conditions over time. This machine learning lifecycle 1300 emphasizes that developing a machine learning model is not a one-time effort but an iterative process requiring ongoing monitoring and adjustment. The feedback loop inherent in the machine learning lifecycle 1300 allows for continual refinement and optimization of models to maintain their accuracy and relevance.

In many embodiments, a first stage of the machine learning lifecycle 1300 is identifying the business goal 1310, which sets the overall direction and purpose of the ML project. This can involve understanding the specific problems or opportunities within the business or project that machine learning can address. A clear business goal 1310 ensures that the project remains focused on delivering tangible value, whether it is improving player experiences, optimizing gametime operations, predicting control scheme changes efficiently, or minimizing player corrections. Without a well-defined goal, it can be challenging to align the subsequent stages of the ML lifecycle 1300, as the choice of model, data processing methods, and performance metrics can all depend on what the business aims to achieve.

Establishing a proper business goal 1310 can also involve engaging with key stakeholders and developers to gather requirements and set success criteria. It can provide a roadmap that outlines what success looks like and helps in framing the ML problem. For example, if the goal is to reduce processor overhead, the project might focus on building a predictive model that identifies potential bottlenecks, allowing the game engine to intervene proactively. Clearly defined goals not only help guide the project but also provide benchmarks for evaluating the effectiveness of the deployed model once it enters production.

Once the business goal 1310 is established, various embodiments take a next step involving ML problem framing 1320, wherein the goal is translated into a specific machine learning task. This can involve selecting the appropriate type of ML problem, such as classification, regression, clustering, or recommendation, and defining the target variables or outputs. For example, if the goal is to identify processor bottlenecks, the problem can be framed as a binary classification task where the model predicts whether a certain number of assets or upcoming control changes will cause the game engine to slow down or the player to become too confused. Proper problem framing can be important as it determines the particular data requirements, choice of model, and evaluation metrics.

During this stage, it is also prudent to consider the constraints and assumptions that may affect the model's development. This might include data availability, computational resources, ethical considerations, or regulatory compliance. Properly framing the problem ensures that the model development aligns with the business's needs and that the problem is broken down into manageable steps, ultimately increasing the project's chances of success.

Data processing 1330 is a step in many embodiments where raw data is collected, cleaned, and transformed into a format suitable for machine learning. This step can involve gathering data from various sources, removing errors or inconsistencies, handling missing values, and normalizing or scaling features to ensure that the model can learn effectively. Feature engineering is often a part of this stage, where new features are derived from the raw data to capture more relevant information and improve model performance.

The quality and preparation of the utilized data can significantly impact the model's accuracy and reliability. Inadequate or poorly processed data can lead to biased or inaccurate predictions, no matter how advanced the model is. Hence, data processing 1330 can require or at least benefit from careful planning and iterative refinement. Once the data is processed, it is typically split into training, validation, and test sets to develop and evaluate the model, ensuring that it generalizes well to new, unseen data.

Model development 1340 is a phase in a number of embodiments where machine learning algorithms are selected, trained, and refined to create a model that addresses the framed problem. This stage can involve choosing the appropriate algorithm (e.g., decision trees, neural networks, support vector machines), setting up the model's architecture, and defining hyperparameters that will guide the training process. The model is trained on the processed data to identify patterns and relationships that allow it to make predictions or decisions.

During model development 1340, the model can be evaluated using the validation dataset to fine-tune its parameters and improve performance. Techniques like cross-validation, regularization, and hyperparameter tuning can be used to prevent overfitting and ensure the model generalizes well. If proper steps are taken, the result is a model that, once it meets predefined performance metrics, is ready for deployment in a real-world environment. However, this process often involves several iterations to optimize the model for the specific business goal, indicated by the arrow back to data processing 1330.

In further embodiments, deployment 1350 is the stage where the developed model is integrated into the production environment to perform its intended tasks. This phase may involve setting up the necessary infrastructure, such as APIs or cloud-based services, to allow the model(s) to process live data and generate predictions. Deployment 1350 can transform the model from a research tool into a functional component of a business process or product, providing real-time insights, automations, or decisions.

Proper deployment 1350 can also include setting up mechanisms for logging, error handling, and user access. Since real-world environments are often dynamic and differ from training conditions, deployment may require continuous adaptation and updates to ensure the model(s) operates efficiently. This step can be important because a model's success is not only determined by its performance metrics but also by its ability to provide actionable results that align with the business goal 1310.

In more embodiments, monitoring 1360 is the ongoing process of tracking the model's performance and behavior after deployment. It involves collecting data on the model's predictions, accuracy, latency, and error rates to detect issues such as concept drift, where changes in the underlying data patterns can degrade the model's accuracy. By continuously monitoring 1360, teams can identify when the model's performance drops and requires retraining or adjustments to align with the evolving data.

Monitoring 1360 can also encompass aspects like user feedback, security, and compliance, ensuring that the model remains effective, reliable, and ethical in its application. It may serve as the feedback loop in the lifecycle, where insights gained from monitoring feed back into the earlier stages, particularly data processing 1330 and model development 1340, to refine the model(s) as needed. This iterative process allows the machine learning system to adapt and maintain its alignment with the original business goal 1310 over time.

Although a specific embodiment for a machine learning lifecycle 1300 suitable for carrying out the various steps, processes, methods, and operations described herein is discussed with respect to FIG. 13, any of a variety of systems and/or processes may be utilized in accordance with embodiments of the disclosure. For example, the particular route of development of the model(s) may not follow this cycle completely. As those skilled in the art will recognize, there are a variety of ways to develop AI products that include various iterative steps that aide in development and refinement of different model(s). The elements depicted in FIG. 13 may also be interchangeable with other elements of FIGS. 1-12 and 14-17 as required to realize a particularly desired embodiment.

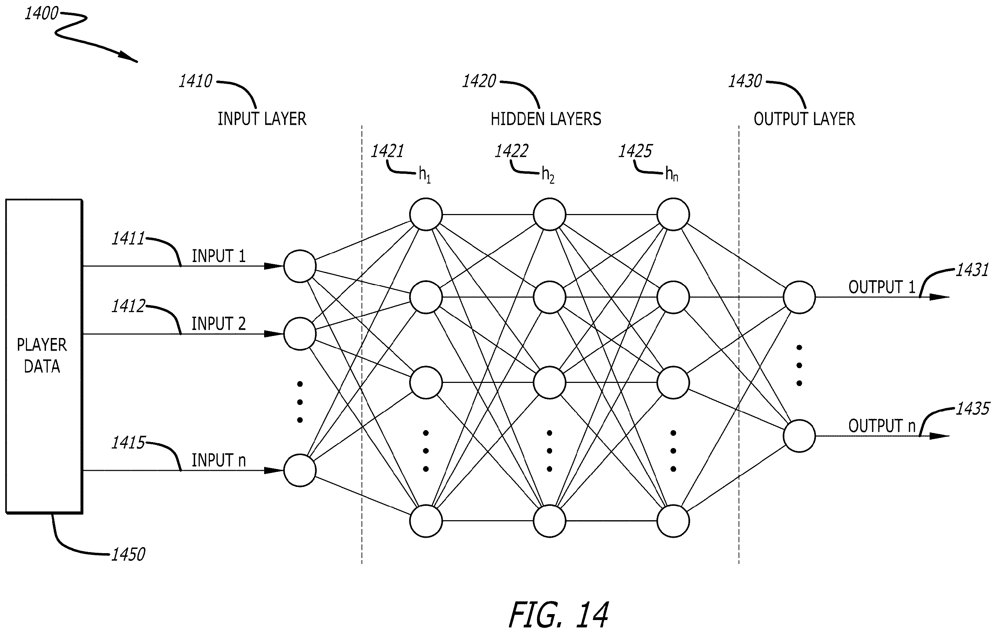

Referring to FIG. 14, an exemplary neural network 1400 in accordance with various embodiments of the disclosure is shown. The embodiment depicted specifically depicts a feedforward neural network with multiple layers. This type of network consists of an input layer 1410, one or more hidden layers 1420, and an output layer 1430. Each layer contains nodes (or neurons) that are interconnected, representing how data flows through the network. The input layer 1410 can receive raw data, which is then processed by the hidden layers 1420 through weighted connections and activation functions. These hidden layers 1420 can enable the network to learn complex patterns and relationships within the data.

The final output layer 1430 produces the network's predictions or classifications based on the processed input. The interconnected nature of the nodes allows the neural network 1400 to learn from data during training by adjusting the weights of connections to minimize prediction errors. This structure is the foundation of deep learning models, as adding more hidden layers 1420 can create a deep neural network, capable of tackling highly complex tasks such as image recognition, natural language processing, and pattern detection in large datasets.

A perceptron or a single artificial neuron is the building block of artificial neural networks (ANNs) and can perform forward propagation of information. For a set of inputs to the perceptron, weights (and biases to shift wights) can be assigned. These inputs and weights can be multiplied out correspondingly together to get a sum output. Those skilled in the art will recognize tools such as, but not limited to, PyTorch, Tensorflow, and MXNet as training packages for common neural network tasks. However, it is contemplated that other tools may be developed specifically for the neural network tasks related to the embodiments described herein.

In additional embodiments, the weight matrices of a neural network can be initialized randomly or obtained from a pre-trained model. These weight matrices can be multiplied with the input matrix (or output from a previous layer) and subjected to a nonlinear activation function to yield updated representations, which are often referred to as activations or feature maps. The loss function (also known as an objective function or empirical risk) can often be calculated by comparing the output of the neural network and the known target value data.

Feedforward networks, such as the neural network 1400 depicted in the embodiment of FIG. 14, are often configured as neural networks where information moves in one direction, from the input layer through the hidden layers to the output layer, without any cycles or loops. They are primarily used for tasks such as classification, regression, and simple pattern recognition, where each input is processed independently of others. In contrast, backpropagation is not a separate type of network but rather a training algorithm commonly used in both feedforward and other types of networks, like recurrent neural networks (RNNs).

Backpropagation involves adjusting the weights of the network in the reverse direction (from output to input) based on the error between the predicted output and the actual target during training. While feedforward describes the structure and data flow within the network, backpropagation is a technique used to optimize the model. Feedforward networks are ideal for straightforward tasks where input-output relationships are not sequential or time-dependent. However, for problems involving learning complex patterns over time, such as speech recognition or time-series analysis, networks that leverage backpropagation for training, like RNNs or deep feedforward networks with many hidden layers, become necessary to capture these intricate dependencies.

Typically, in these network arrangements, the weights are iteratively updated via various methods including, but not limited to, stochastic gradient descent algorithms in order to help minimize the loss function until the desired accuracy is achieved. Most modern deep learning frameworks can facilitate this by using reverse-mode automatic differentiation to obtain the partial derivatives of the loss function with respect to each network parameter through recursive application of the chain rule. Colloquially, this is also known as back-propagation. Common gradient descent algorithms can include, but are not limited to, Stochastic Gradient Descent (SGD), Adam, Adagrad etc. The learning rate is an important parameter in gradient descent. Except for SGD, all other methods use adaptive learning parameter tuning. Depending on the objective such as classification or regression, different loss functions such as Binary Cross Entropy (BCE), Negative Log Likelihood Loss (NLLL) or Mean Squared Error (MSE) can be used.

Neural network architecture is commonly used for a wide range of tasks in fields such as computer vision, natural language processing, financial forecasting, and materials science. For instance, it can be employed to recognize patterns in images, such as identifying objects or faces, or to classify text into categories, like spam detection in emails. It is also useful in regression problems, such as predicting stock prices or energy consumption, where input features can be processed to output continuous values. However, this is a general example of an artificial intelligence (AI) model, illustrating how a feedforward neural network works. Depending on the problem, other methods and models may be more appropriate. For example, convolutional neural networks (CNNs) are often used for image processing tasks, while recurrent neural networks (RNNs) are suitable for sequential data like time series data or text. Additionally, simpler models like linear regression, decision trees, or support vector machines (SVMs) may be sufficient if the problem is less complex, or the dataset is relatively small. The embodiment depicted in FIG. 14 is presented as an exemplary ML solution that may be deployed within one or more methods or systems described herein.

In many embodiments, the input layer 1410 is the first layer in a neural network 1400 and serves as the initial point where raw data is introduced into the model. Each node (or neuron) in this layer represents an individual feature or variable from the dataset, allowing the network to receive and process various types of data, such as pixel values in an image, numerical features in a spreadsheet, or words in a text document. For instance, in image recognition tasks, the input layer can consist of nodes that correspond to the pixel values of the image, providing the network with the visual information needed to identify objects or patterns. The number of nodes in the input layer directly depends on the number of features present in the dataset. If there are one-hundred features in the data, the input layer will typically have one-hundred nodes, each conveying one piece of the information to the subsequent layers. In more embodiments, the inputs of the neural network 1400 are generally scaled i.e., normalized to have a zero mean and/or unit standard deviation. Scaling can also be applied to the input of hidden layers (using batch or layer normalization) to improve the stability of neural network 1400.

Unlike the hidden layers 1420 and output layers 1430, the input layer 1410 typically does not perform any computations or transformations on the data. Its primary function is often to pass the input data to the next layer in the network, the first hidden layer 1421. However, it is often desired that the data fed into this layer is preprocessed appropriately, such as being normalized or standardized, to ensure that the neural network can learn efficiently. Proper preprocessing, like scaling numerical values or encoding categorical variables, can help the network process data uniformly, facilitating more stable and faster convergence during training.

The input layer's design depends on the nature of the problem. For example, in natural language processing, the input layer may represent words encoded as numerical vectors, while in time-series analysis, each node might represent a data point in a sequence. While the input layer 1410 itself does not modify the data, it sets the stage for the neural network to extract complex patterns and relationships through the deeper layers. This flexibility in handling various types of input make the neural network 1400 a powerful tool for a diverse set of applications.

With respect to the embodiments described herein, the input layer may be configured with a plurality of inputs providing player data 1450, control scheme data, camera cut attributes/parameters or other data sources. For example, a model can be configured with a first input 1411 configured as a first predicted input for the player, a second input 1412 is configured with a first actual input from the player, while additional inputs can be added related to the number of potential inputs in the system. The nth input 1415 can be configured in certain embodiments to include the current score or status such that a determination as to keep or change the current control scheme in place may be possible. However, as those skilled in the art will recognize, additional setups can be configured such that the inputs can be configured to also include different parameters of the controls, the number of errors allowed before correction, the amount of help to be provided based on historical data, among other input types, etc.

In a number of embodiments, the neural network 1400 comprises a plurality of hidden layers 1420. The embodiment depicted in FIG. 14 comprises a first hidden layer 1421, a second hidden layer 1422, and an nth hidden layer 1425, which are denoted as h₁, h₂, and hₙ respectively. In many embodiments, the hidden layers 1420 are where the core of the model's learning and pattern recognition occurs. In each hidden layer, individual neurons receive inputs from the previous layer, apply a set of weights, add a bias, and pass the result through an activation function (e.g., ReLU, leaky ReLU, sigmoid, hyperbolic tangent (tanh), Swish, etc.). This process can introduce non-linearity, allowing the network to capture complex patterns in the data that simple linear models cannot. The intricate web of connections among neurons across layers helps the network transform and process input features into representations that become progressively more abstract and useful for making predictions.

The first hidden layer 1421 h₁ receives direct input from the input layer, transforming the raw data into an initial set of features. For example, in an image recognition task, this layer might begin identifying basic patterns, such as edges or simple textures. The output of the first hidden layer 1421 is then passed to a second hidden layer 1422 h₂, which builds upon the features identified by the first hidden layer 1421. This deeper layer might start recognizing more complex patterns, such as shapes or specific object components, by combining the lower-level features identified earlier. This can continue on until a last, nth hidden layer 1425 hₙ continues this abstraction process, allowing the network to recognize even higher-level, more detailed features, such as identifying an entire object within an image or understanding intricate relationships in the input data.

Each hidden layer adds a level of complexity and abstraction to the network's learning capabilities. The multi-layer structure can enable the network to move from recognizing simple patterns in the first input layer 1421 to highly complex, abstract concepts in the deeper layers. The number of hidden layers and neurons within them can vary depending on the problem's complexity. More hidden layers generally allow the network to model more intricate functions, making deep neural networks especially effective for tasks like image recognition, natural language processing, and complex predictive modeling. However, adding more layers also increases the computational demand and the risk of overfitting, highlighting the need to carefully design and tune these hidden layers for optimal performance.

In various embodiments, the output layer 1430 is often the final layer in a neural network and is responsible for producing the network's predictions or classifications based on the information processed through the previous hidden layers 1420. Each neuron in the output layer 1430 can represent a specific outcome or category that the model can predict. In the embodiment depicted in FIG. 14, the outputs are labeled as "output 1" to "output n," indicating that the network can be designed to have a varying number of outputs depending on the nature of the problem being solved for. For example, in a binary classification task (e.g., changing a control scheme vs. not changing the control scheme), there would typically be a single output neuron that provides a probability score for one of the two classes/outcomes. In contrast, for multi-class classification (e.g., categorizing upcoming control scheme changes and if the player would be most likely to adapt to quickly), the output layer would contain multiple neurons, each corresponding to a different class.

The number of neurons in the output layer 1430 can also designed specifically for other types of tasks, such as regression, where the model can predict continuous values. In such cases, the output layer 1430 might contain a single neuron representing a numerical prediction, such as the price of a house or the temperature forecast, etc. Alternatively, in complex applications like multi-label classification (where each input can belong to multiple classes simultaneously), the output layer 1430 could have multiple neurons, each representing a different class, with each neuron outputting a probability of the input belonging to that specific class.

The activation function used in the output layer can vary based on the desired output. For binary classification, a sigmoid function is commonly used to produce a probability between 0 and 1. For multi-class classifications, a SoftMax function can be applied to output a set of probabilities that sum to 1, indicating the most likely class. For regression problems, a linear activation function is often used to output a continuous range of values. The flexibility in designing the output layer allows the neural network 1400 to be applied to a wide variety of tasks, from simple binary decisions to complex multi-output predictions, making them a versatile tool in artificial intelligence and machine learning.

Although a specific embodiment for an exemplary neural network suitable for carrying out the various steps, processes, methods, and operations described herein is discussed with respect to FIG. 14, any of a variety of systems and/or processes may be utilized in accordance with embodiments of the disclosure. For example, real-world neural networks are often far more complex, featuring many more layers, nodes, and connections than the simplified structure shown in the embodiment depicted in FIG. 14, which is an illustrative example meant to make it easier to explain the basic concepts of neural networks and how they process information. The specific features and functions described herein are not intended to be limiting to this specific embodiment. Additionally, the elements depicted in FIG. 14 may also be interchangeable with other elements of FIGS. 1-13 and 15-17 as required to realize a particularly desired embodiment.

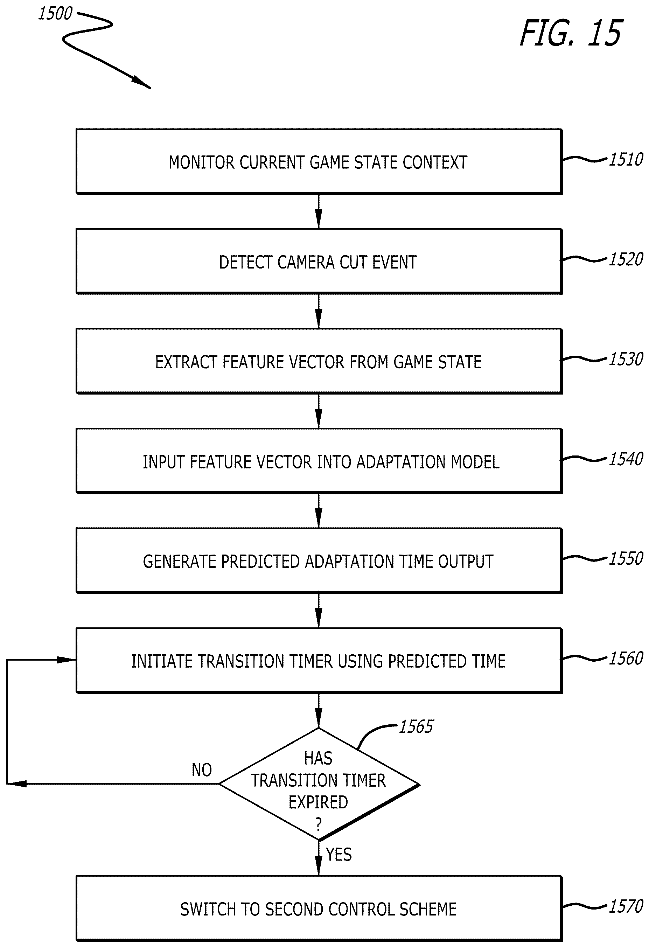

Referring to FIG. 15, a flowchart of a process for predicting player adaptation time using machine learning, in accordance with various embodiments of the disclosure is shown. In many embodiments, the process 1500 can monitor current game state context (block 1510). This monitoring may involve continuous tracking of various in-game variables such as player health, enemy density, and environmental complexity to establish a baseline for difficulty. In some embodiments, the monitoring can focus on player-specific metrics, such as recent input latency or error rates in previous combat encounters. For example, the system might track how quickly the player reacted to the last three quick-time events to gauge current alertness levels. Additionally, in certain embodiments, the game state context may include metadata regarding the specific scene type, distinguishing between high-intensity combat sequences and slower-paced exploration segments.

In further embodiments, the process 1500 can detect camera cut event (block 1520). This detection might occur in response to a signal from a virtual editor logic indicating that a new camera angle has been selected for rendering. Alternatively, the detection could be triggered by a specific player action, such as a directional hint or a character movement that crosses a spatial threshold requiring a new perspective. For instance, the system may register a cut event when the player character moves from an interior room to an exterior balcony, necessitating a wide-angle view. In other embodiments, the detection may be predictive, identifying an upcoming cut slightly before it renders to prepare the machine learning systems.

In additional embodiments, the process 1500 can extract feature vector from game state (block 1530). This extraction may involve selecting specific variables from the monitored context and normalizing them into a format suitable for neural network processing. In some embodiments, the process may utilize dimensionality reduction techniques to convert complex environmental data into a simplified numerical representation. For example, a complex 3D geometry of a room might be reduced to a set of values representing available path vectors and obstacle density. Furthermore, in certain embodiments, categorical data such as the type of weapon equipped or the current camera mode may be one-hot encoded to be included in the feature vector.

In still more embodiments, the process 1500 can input feature vector into adaptation model (block 1540). This step may involve passing the processed numerical data into the input layer of a pre-trained neural network stored locally on the gaming device. Alternatively, the adaptation model might be a regression model or a decision tree designed to correlate game states with human reaction times. In a non-limiting example, the feature vector could be sent to a cloud-based server for processing if the device offloads machine learning tasks to reduce local processor overhead. Moreover, the adaptation model could be a player-specific model that has been fine-tuned on the specific user's historical gameplay data.

In yet further embodiments, the process 1500 can generate predicted adaptation time output (block 1550). This output may be a specific time value, such as a duration in milliseconds, representing how long the system expects the player will need to reorient themselves. In some embodiments, the output might be a probability distribution over a range of times, allowing the system to select a conservative estimate to ensure player safety. For instance, the model might output a ninety percent confidence interval that the player will adapt within 500 milliseconds. Additionally, in other embodiments, the output could be a classification label, such as "fast," "medium," or "slow," which corresponds to predefined timer settings within the game engine.

In numerous embodiments, the process 1500 can initiate transition timer using predicted time (block 1560). This initiation may involve setting a countdown clock that delays the application of a new control scheme until the predicted duration has elapsed. In some embodiments, the timer might be implemented as a frame counter, where the control mapping remains locked to the previous orientation for a set number of rendered frames. For example, if the predicted time is 300 milliseconds and the game runs at 60 frames per second, the timer would be set for 18 frames. Furthermore, the timer may be configured to be interruptible, allowing the system to override the delay if explicit player input matching the new orientation is detected before the timer expires.

In some embodiments, the process 1500 can determine if transition timer has expired (block 1565). If the timer is still active, the process 1500 can continue to wait or re-evaluate the timer status (block 1565). However, if the transition timer has expired, then the process 1500 can switch to second control scheme (block 1570). In certain embodiments, while the timer has not expired, the system maintains the first control scheme to prevent player disorientation. It is contemplated that during this waiting period, the system may continue to monitor for player inputs that might preemptively satisfy the adaptation criteria.

In many further embodiments, the process 1500 can switch to second control scheme (block 1570). This switching can involve updating the input mapping such that forward movement on a controller corresponds to the forward direction relative to the new camera orientation. In some embodiments, the switch may be instantaneous to ensure responsiveness once the adaptation window has closed. For instance, the system might swap the coordinate transform matrices applied to the raw controller input from the first camera's perspective to the second camera's perspective. Alternatively, in certain embodiments, the switch might involve a brief interpolation period where the control influence blends from the old scheme to the new scheme to smooth out any residual input errors.

Although a specific embodiment for a process 1500 for predicting player adaptation time using machine learning suitable for carrying out the various steps, processes, methods, and operations described herein is discussed with respect to FIG. 15, any of a variety of systems and/or processes may be utilized in accordance with embodiments of the disclosure. For example, the adaptation model may be updated in real-time based on the accuracy of the prediction compared to the actual adaptation time. The elements depicted in FIG. 15 may also be interchangeable with other elements of FIGS. 1-14 and 16-17 as required to realize a particularly desired embodiment.

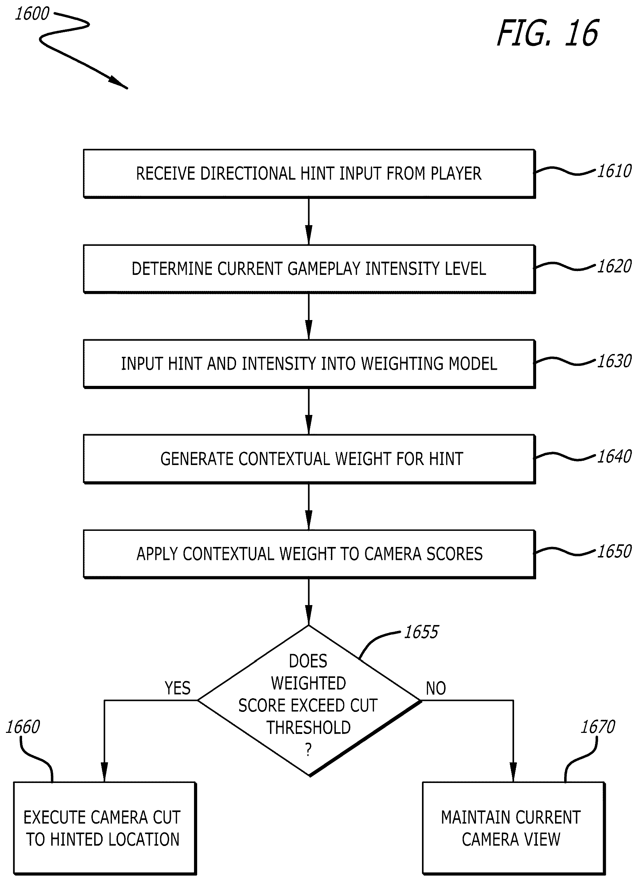

Referring to FIG. 16, a flowchart of a process 1600 for machine learning based hint weighting in accordance with various embodiments of the disclosure is shown. In many embodiments, the process 1600 can receive directional hint input from player (block 1610). This input generally corresponds to a physical manipulation of an interface device, such as the tilting of a secondary analog stick on a game controller toward a specific cardinal direction. In some embodiments, the input might be derived from alternative sources, such as a gaze detection sensor in a virtual reality headset that tracks where the user is looking. For example, the player might look toward a darkened corner of a room, generating a vector indicating interest in that location. Additionally, in certain embodiments, the system may require the input to be sustained for a minimum duration, such as two hundred milliseconds, to distinguish a deliberate hint from an accidental twitch.

In further embodiments, the process 1600 can determine current gameplay intensity level (block 1620). This determination can involve analyzing real-time game state variables, such as the tempo of the background music, the number of active enemies, or the rate of player health depletion. In some embodiments, the intensity level is classified into discrete categories, such as "exploration," "stealth," "combat," or "cinematic event." For instance, a high intensity level might be flagged during a boss battle where the camera needs to stay focused on the threat rather than player curiosity. Conversely, in a non-limiting example, a low intensity level would be registered during a walking segment, suggesting the system should be more receptive to player direction.

In additional embodiments, the process 1600 can input hint and intensity into weighting model (block 1630). This step involves feeding the vector of the directional hint and the calculated intensity value into a machine learning algorithm, such as a neural network or a decision tree. In some embodiments, the weighting model may also accept inputs regarding the player's historical preferences, such as a tendency to look for hidden paths or a preference for wide-angle shots. For example, the model might combine a "right" stick input with a "combat" intensity state to determine how much influence the player should have. It is contemplated that this model is pre-trained on aggregated telemetry data to recognize optimal camera behaviors for different contexts.

In still more embodiments, the process 1600 can generate contextual weight for hint (block 1640). This generation results in a numerical value or scalar that represents the strength or validity of the player's request given the current situation. In some embodiments, if the intensity is high, the generated weight might be near zero, effectively dampening the hint to prevent the camera from swinging away from the action. In contrast, in a low-intensity scenario, the weight might be substantial, allowing the hint to heavily influence the camera selection. For instance, the output might be a multiplier of 2.0 applied to any camera point that lies in the direction of the player's input.

In yet further embodiments, the process 1600 can apply contextual weight to camera scores (block 1650). This application involves modifying the calculated framing scores of potential camera points based on the generated contextual weight. In some embodiments, camera points located within a frustum defined by the directional hint receive a positive score boost proportional to the weight. For example, if the player points "up," cameras positioned on a balcony or ceiling might receive a score increase. Alternatively, in certain embodiments, cameras in the opposite direction of the hint might receive a score penalty, reducing their likelihood of being selected by the virtual editor logic.

In some embodiments, the process 1600 can determine if weighted score exceed cut threshold (block 1655). If the scores, even with the added weight, do not surpass the required value for a transition, then the process 1600 can maintain current camera view (block 1670). However, if weighted score exceeds cut threshold, then the process 1600 can execute camera cut to hinted location (block 1660). Then, various embodiments of the process 1600 can proceed to carry out the camera transition.

In numerous embodiments, the process 1600 can execute camera cut to hinted location (block 1660). This execution involves the virtual editor logic triggering a cut to the camera point that now has the highest score due to the player's influence. In some embodiments, the cut is performed instantly to reward the player's curiosity and provide immediate visual feedback. For example, the view might switch from an over-the-shoulder perspective to a surveillance camera view down a hallway the player indicated. In other embodiments, the transition might be smoothed or delayed slightly to sync with a beat in the soundtrack or a character animation.

In various embodiments, the process 1600 can maintain current camera view (block 1670). This maintenance ensures that the camera does not erratically switch to a sub-optimal view just because the player moved the stick. In some embodiments, the system might provide a subtle negative feedback, such as a "locked" icon or a resistance sound, to indicate that the hint cannot be honored at this time. For instance, if the player points toward a solid wall where no camera points exist, the system will ignore the hint and keep the current framing to preserve gameplay continuity. Additionally, in certain embodiments, the system may log this rejected hint to update the weighting model for future interactions.

Although a specific embodiment for a process 1600 for machine learning based hint weighting suitable for carrying out the various steps, processes, methods, and operations described herein is discussed with respect to FIG. 16, any of a variety of systems and/or processes may be utilized in accordance with embodiments of the disclosure. For example, the weighting model may adjust the influence of hints based on the battery level of the controller. The elements depicted in FIG. 16 may also be interchangeable with other elements of FIGS. 1-15 and 17 as required to realize a particularly desired embodiment.

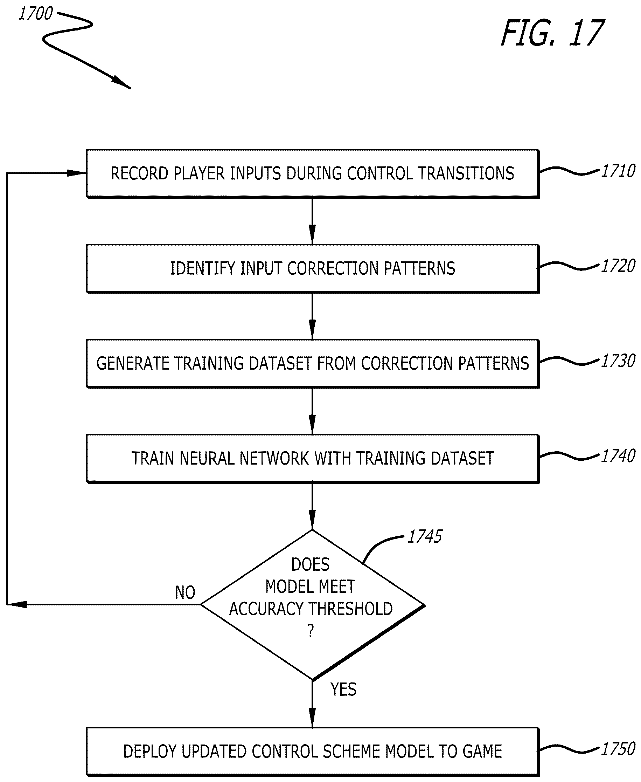

Referring to FIG. 17, a flowchart of a process 1700 for training control scheme models via telemetry in accordance with various embodiments of the disclosure is shown. In many embodiments, the process 1700 can record player inputs during control transitions (block 1710). This recording may focus on the specific window of time immediately following a camera cut, capturing high-frequency data regarding the position and trajectory of the analog sticks. In some embodiments, the recording includes metadata about the specific camera pair involved in the transition to contextually isolate difficult cuts. For example, the system might log that cuts between "Camera A" and "Camera B" consistently result in erratic input data. Additionally, in certain embodiments, the inputs are buffered locally on the device and transmitted to a central server only when the device is idle or connected to a high-bandwidth network to preserve gameplay performance.

In further embodiments, the process 1700 can identify input correction patterns (block 1720). This identification involves analyzing the recorded traces to find specific signatures of player confusion, such as a "V-shape" movement where a player pushes in one direction, realizes it is wrong, and quickly snaps to a corrected angle. In some embodiments, the process may identify "micro-stutters" or hesitation where the input drops to zero immediately after a cut, indicating the player is waiting to reorient themselves. For instance, a delay of over 500 milliseconds before any input is registered might be flagged as a significant hesitation pattern. Furthermore, in non-limiting examples, the system might compare the actual input vector against the ideal input vector required to maintain the character's momentum, categorizing the deviation as a correction error.

In additional embodiments, the process 1700 can generate training dataset from correction patterns (block 1730). This generation may involve aggregating millions of identified patterns from the global player base to create a robust dataset that covers a wide variety of playstyles and skill levels. In some embodiments, the data is anonymized and normalized to remove player-specific idiosyncrasies that do not reflect the general population's behavior. For example, the dataset might be balanced to ensure that both inverted and non-inverted control schemes are represented equally. Moreover, in certain embodiments, the dataset is labeled with "success" or "failure" tags based on whether the player successfully navigated the immediate obstacle following the cut.

In still more embodiments, the process 1700 can train neural network with training dataset (block 1740). This training may utilize supervised learning techniques to teach the network to predict the optimal control mapping or transition delay based on the observed error patterns. In some embodiments, the training occurs on a centralized server farm capable of processing high-dimensional data efficiently. For instance, the neural network might be a recurrent neural network (RNN) designed to understand the temporal sequence of inputs leading up to a correction. Alternatively, in certain embodiments, the training could employ reinforcement learning, where the model is rewarded for minimizing the predicted deviation between the player's initial input and the desired path.

In yet further embodiments, the process 1700 can determine if model meets accuracy threshold (block 1745). If the trained model does not perform satisfactorily against a validation set, then the process 1700 can once again record player inputs during control transitions (block 1710) to gather more diverse data. However, if the model meets accuracy threshold, then the process 1700 can deploy updated control scheme model to game (block 1750). In some embodiments, the threshold is dynamic, requiring higher accuracy for ranked competitive modes compared to casual story modes.

In numerous embodiments, the process 1700 can deploy updated control scheme model to game (block 1750). This deployment involves pushing the new model weights to player devices via a patch or a background update service. In some embodiments, the deployment is staggered, using A/B testing on a subset of the player base to verify that the new model actually reduces input errors in a live environment. For example, fifty percent of players might receive the new adaptation model while the other fifty percent remain on the legacy heuristic model to serve as a control group. Additionally, in certain embodiments, the deployment allows the local game engine to hot-swap the model without requiring a restart, ensuring that improvements are felt immediately during the next game session.

Although a specific embodiment for a process 1700 for training control scheme models via telemetry suitable for carrying out the various steps, processes, methods, and operations described herein is discussed with respect to FIG. 17, any of a variety of systems and/or processes may be utilized in accordance with embodiments of the disclosure. For example, the training process may be performed locally on the device during charging periods to create a personalized model for that specific console owner. The elements depicted in FIG. 17 may also be interchangeable with other elements of FIGS. 1-16 as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A device, comprising:
a processor;
and a memory communicatively coupled to the processor, wherein the memory comprises a full control camera logic that is configured to:
monitor a current game state context;
detect that a camera cut event has occurred;
extract a feature vector from the current game state context;
input the feature vector into a machine-learning adaptation model; and
generate a predicted adaptation time output from the machine-learning adaptation model.

2. The device of claim 1, wherein the feature vector is extracted in response to the camera cut event.

3. The device of claim 1, wherein the full control camera logic is further configured to initiate a transition timer.

4. The device of claim 3, wherein the transition timer is initiated using at least the predicted adaptation time output.

5. The device of claim 4, wherein the current game state context includes at least a first control scheme.

6. The device of claim 5, wherein the full control camera logic is further configured to switch to a second control scheme upon expiration of the transition timer.

7. The device of claim 1, wherein the machine-learning adaptation model comprises a neural network trained on a training dataset derived from historical player telemetry data.

8. The device of claim 7, wherein the training dataset comprises a plurality of input correction patterns identified by recording player inputs during previous control transitions.

9. The device of claim 6, wherein the full control camera logic is further configured to maintain the first control scheme prior to the expiration of the transition timer.

10. The device of claim 6, wherein the second control scheme recalibrates a set of player inputs to maintain a set of in-game actions relative to a second orientation associated with the camera cut event.

11. The device of claim 1, wherein the feature vector comprises at least one of player type data, player movement data, or environmental complexity data extracted from the current game state context.

12. A device, comprising:
a processor;
and a memory communicatively coupled to the processor, wherein the memory comprises a full control camera logic that is configured to:
receive a directional hint input from a player;
determine a current gameplay intensity level;
input the directional hint input and the current gameplay intensity level into a weighting model;
generate a contextual weight for the directional hint input;
apply the contextual weight to a set of camera scores associated with a plurality of camera points;
and execute a camera cut to a hinted location.

13. The device of claim 12, wherein the camera cut is executed to the hinted location if the set of camera scores exceed a threshold.

14. The device of claim 13, wherein the threshold is a cut threshold.

15. The device of claim 12, wherein the full control camera logic is further configured to validate the directional hint input by determining if the directional hint input is sustained for a minimum duration prior to determining the current gameplay intensity level.

16. The device of claim 12, wherein the weighting model utilizes aggregated telemetry data derived from a plurality of other players to adjust the contextual weight.

17. The device of claim 13, wherein the full control camera logic is further configured to maintain a current camera view if the set of camera scores, with the contextual weight applied, does not exceed the threshold.

18. The device of claim 12, wherein the weighting model is a neural network trained to correlate player inputs with camera angle preferences based on historical gameplay data.

19. The device of claim 12, wherein the set of camera scores includes a base score for each of the plurality of camera points, and wherein applying the contextual weight comprises scaling the base score of a camera point located in a direction corresponding to the directional hint input.

20. A method of managing player controls in a fully controlled camera system, comprising:
monitoring, by a device, a current game state context;
detecting, by the device, that a camera cut event has occurred;
extracting, by the device, a feature vector from the current game state context;
inputting, by the device, the feature vector into a machine-learning adaptation model;
and generating, by the device, a predicted adaptation time output from the machine-learning adaptation model.
